(19) Europäisches Patentamt
European Patent Office
Office européen des brevets

(11) EP 4 563 656 A1

(12) EUROPEAN PATENT APPLICATION
published in accordance with Art. 153(4) EPC

(43) Date of publication:
**04.06.2025 Bulletin 2025/23**

(21) Application number: **23846673.4**

(22) Date of filing: **28.07.2023**

(51) International Patent Classification (IPC):
***C08L 69/00*** *(2006.01)* ***C08G 64/02*** *(2006.01)*
***C08G 64/04*** *(2006.01)*

(52) Cooperative Patent Classification (CPC):
**C08G 64/02; C08G 64/04; C08L 69/00**

(86) International application number:
**PCT/JP2023/027761**

(87) International publication number:
**WO 2024/024943 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.07.2022 JP 2022120723**
**28.07.2022 JP 2022120724**

(71) Applicant: **Mitsubishi Chemical Corporation**
**Tokyo 100-8251 (JP)**

(72) Inventors:
- **KOMIYA, Yukinori**
  **Tokyo 100-8251 (JP)**
- **YOKOGI, Masashi**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) POLYCARBONATE RESIN COMPOSITION

(57) A polycarbonate resin composition including: a carbonate structural unit (X) derived from an aliphatic dihydroxy compound (1) represented by the following formula (1); and, a carbonate structural unit (Y) derived from a dihydroxy compound (2) satisfying the following requirement I, wherein the polycarbonate resin composition has a melting point peak temperature when the melting point peak temperature is measured using a differential scanning calorimeter and heating the polycarbonate resin composition at a heating rate of 20°C/min.

<Requirement I>

A polycarbonate resin (2) obtained by polymerizing the dihydroxy compound (2) and a carbonate source by a transesterification method has a melting point peak temperature when the melting point peak temperature is measured using a differential scanning calorimeter and heating the polycarbonate resin (2) at a heating rate of 20°C/min.

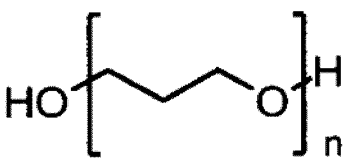

(1)

(In the formula (1), n is an integer of 2 or more.)

EP 4 563 656 A1

## Description

### Technical Field

The present invention relates to a polycarbonate resin composition. Specifically, the present invention relates to a polycarbonate resin composition that has excellent heat resistance, flexibility, mechanical strength, low-temperature mechanical strength, and rubber elasticity. The present invention also relates to a thermoplastic resin composition containing the polycarbonate resin composition, and an injection molded product and an extrusion molded product of the polycarbonate resin composition or the thermoplastic resin composition.

### Background Art

Polycarbonate resins have high mechanical strength, good electrical characteristics, high transparency, and the like, and have been widely used as engineering plastics in various fields, such as electrical and electronic devices, automobiles, and the like. However, there are few polycarbonate resins that are used as elastomers, such as polyester based thermoplastic elastomers and thermoplastic polyurethanes. The development of polycarbonate based thermoplastic elastomers may lead to further expansion of applications for polycarbonate resins.
On the other hand, there are concerns about the depletion of petroleum resources and global warming due to increased carbon dioxide emissions, and so there is a demand for the development of plastics made from carbon-neutral plant-derived raw monomers. In this context, polycarbonate resins made from isosorbide (hereinafter sometimes referred to as "ISB"), a plant-derived raw material, have been developed in recent years and have begun to be used for automobile parts, optical applications, and glass replacement applications (for example, see Patent Literatures 1 and 2).
Patent Literature 3 discloses a polycarbonate resins made from a compound made from a plant-derived raw material, which has excellent flexibility, hue, and thermal stability, and a polycarbonate resin composition which uses the polycarbonate resin as an impact modifier and has excellent impact resistance and heat resistance. Specifically, Patent Literature 3 discloses a copolymerized polycarbonate resin made from polytrimethylene ether glycol (hereinafter sometimes abbreviated as "PO3G") and isosorbide.
Patent Literature 4 discloses a copolymerized polycarbonate resin made from a polyoxyalkylene glycol and an alicyclic dihydroxy compound and has excellent heat storage properties, heat resistance, and shape retention.
Patent Literature 5 discloses a copolymerized polycarbonate resin made from PO3G and an aromatic dihydroxy compound having low gas generation.

### Citation List

#### Patent Literature

Patent Literature 1: WO 2004/111106

Patent Literature 2: WO 2007/148604

Patent Literature 3: JP 2021-91900 A

Patent Literature 4: JP 2021-169606 A

Patent Literature 5: WO 2021/059884

### Summary of Invention

#### Technical Problem

The polycarbonate resin of Patent Literature 3 has excellent flexibility, but due to copolymerization with polytrimethylene ether glycol, the glass transition temperature is significantly lowered and the heat resistance is reduced.
The polycarbonate resin of Patent Literature 4 has excellent heat storage properties, but in order to have heat storage properties, it is necessary to have a melting point peak temperature in a low temperature range, i.e., it is necessary to crystallize, and this reduces flexibility and mechanical strength.
The polycarbonate resin of Patent Literature 5 generates little gas. But as a result of inventor’s investigation, it

was found that this polycarbonate resin had low heat resistance and could not be molded.

In order to contain a polycarbonate resin being an elastomer as a main component resin, it is necessary to achieve not only flexibility but also heat resistance and mechanical strength, and therefore improvements in these areas are necessary.

Under these circumstances, an object of the present invention is to provide a polycarbonate resin composition having excellent heat resistance, flexibility, mechanical strength, low-temperature mechanical strength, and rubber elasticity.

Solution to Problem

The present inventor has discovered that a polycarbonate resin composition containing a carbonate structural unit derived from polytrimethylene ether glycol and a carbonate structural unit derived from a specific dihydroxy compound and having a melting point peak temperature can meet the above mentioned object.

The gist of the present invention are in the following [1] to [21].

[1] A polycarbonate resin composition comprising: a carbonate structural unit (X) derived from an aliphatic dihydroxy compound (1) represented by the following formula (1); and, a carbonate structural unit (Y) derived from a dihydroxy compound (2) satisfying the following requirement I,
wherein the polycarbonate resin composition has a melting point peak temperature when the melting point peak temperature is measured using a differential scanning calorimeter and heating the polycarbonate resin composition at a heating rate of 20°C/min.
<Requirement I>
A polycarbonate resin (2) obtained by polymerizing the dihydroxy compound (2) and a carbonate source by a transesterification method has a melting point peak temperature when the melting point peak temperature is measured using a differential scanning calorimeter and heating the polycarbonate resin (2) at a heating rate of 20°C/min.

[Chem. 1]

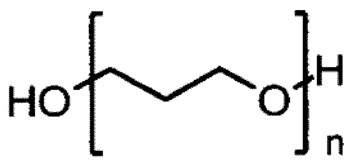

(1)

(In the formula (1), n is an integer of 2 or more.)

[2] The polycarbonate resin composition according to [1], wherein a content of the carbonate structural unit (X) is 1 wt% or more and 99 wt% or less, and the content of the carbonate structural unit (Y) is 0.1 wt% or more and 99 wt% or less, based on 100 wt% of all carbonate structural units of the polycarbonate resin composition.

[3] The polycarbonate resin composition according to [2], wherein the content of the carbonate structural unit (X) is 1 wt% or more and 75 wt% or less, and the content of the carbonate structural unit (Y) is 25 wt% or more and 99 wt% or less, based on 100 wt% of all carbonate structural units of the polycarbonate resin composition.

[4] The polycarbonate resin composition according to any one of [1] to [3], wherein the sum of a content of the carbonate structural unit (X) and a content of the carbonate structural unit (Y) is 90 wt% or more, based on 100 wt% of all carbonate structural units of the polycarbonate resin composition.

[5] The polycarbonate resin composition according to any one of [1] to [4], wherein a number average molecular weight of the aliphatic dihydroxy compound represented by the formula (1) is 400 or more and 2,900 or less.

[6] The polycarbonate resin composition according to any one of [1] to [5], wherein in the measurement of the melting point peak temperature of the requirement I, the polycarbonate resin (2) has a melting point peak temperature when the polycarbonate resin (2) obtained by polymerization by the transesterification method is directly subjected to the

measurement of the melting point peak temperature.

[7] The polycarbonate resin composition according to any one of [1] to [6], wherein the melting point peak temperature of the polycarbonate resin (2) is 150°C or higher and 300°C or lower.

[8] The polycarbonate resin composition according to any one of [1] to [7], wherein the dihydroxy compound (2) is a dihydroxy compound represented by any one of the following formulas (2) to (6).

[Chem. 2]

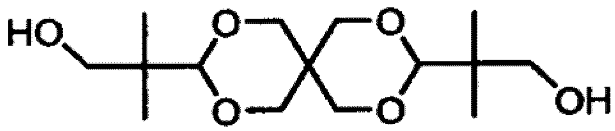

(2)

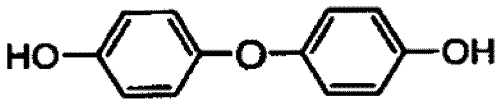

(3)

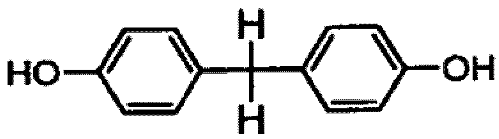

(4)

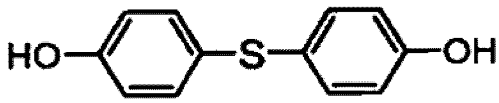

(5)

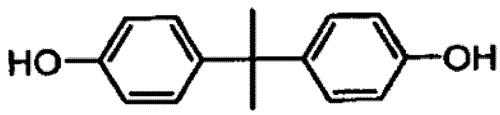

(6)

[9] The polycarbonate resin composition according to any one of [1] to [8], wherein the polycarbonate resin composition has the melting point peak temperature in the range of 150°C or higher.

[10] The polycarbonate resin composition according to any one of [1] to [9], wherein the polycarbonate resin composition has the melting point peak temperature in the range of 240°C or lower.

[11] The polycarbonate resin composition according to any one of [1] to [10], wherein the dihydroxy compound (2) is a dihydroxy compound represented by the following formula (2).

[Chem. 3]

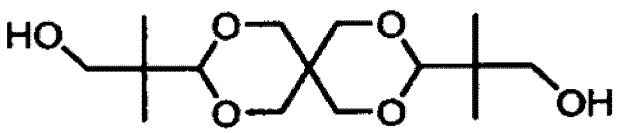

(2)

[12] The polycarbonate resin composition according to [11], wherein the polycarbonate resin composition has a

number average molecular weight (Mn) (polystyrene equivalent molecular weight) measured by GPC of 10,000 or more and 100,000 or less.

[13] The polycarbonate resin composition according to any one of [1] to [12], wherein the carbonate structural unit (X) and the carbonate structural unit (Y) are contained as a copolymerized polycarbonate resin.

[14] The polycarbonate resin composition according to any one of [1] to [12], wherein the polycarbonate resin composition is a blend of a polycarbonate resin containing the carbonate structural unit (X) and a polycarbonate resin containing the carbonate structural unit (Y).

[15] The polycarbonate resin composition according to any one of [1] to [14], wherein the polycarbonate resin composition has a flow value (Q value) of $3\times10^{-2}$ $cm^3$/sec or more measured using a raised-type flowtester at 240°C and 160 kgf.

[16] The polycarbonate resin composition according to any one of [1] to [15], wherein the polycarbonate resin composition has a glass transition temperature of 30°C or lower when the glass transition temperature is measured using a differential scanning calorimeter and heating the polycarbonate resin composition at a heating rate of 20°C/min.

[17] The polycarbonate resin composition according to any one of [1] to [16], wherein a sample prepared by hot pressing the polycarbonate resin composition has a tensile modulus of 5 MPa or more and 300 MPa or less.

[18] A thermoplastic resin composition comprising the polycarbonate resin composition according to any one of [1] to [17], wherein the content of the polycarbonate resin composition is 1 wt% or more and 30 wt% or less, based on 100 wt% of the thermoplastic resin composition.

[19] An injection molded product obtained by injection molding the polycarbonate resin composition according to any one of [1] to [17] or the thermoplastic resin composition according to [18].

[20] An extrusion molded product obtained by extrusion molding the polycarbonate resin composition according to any one of [1] to [17] or the thermoplastic resin composition according to [18].

[21] The extrusion molded product according to [20], wherein the extrusion molded product is a sheet or a film.

Advantageous Effects of Invention

According to the present invention, it is possible to provide a polycarbonate resin composition that has excellent heat resistance, flexibility, mechanical strength, low-temperature mechanical strength, and rubber elasticity.
Since the polycarbonate resin composition of the present invention has excellent heat resistance, flexibility, mechanical strength, low-temperature mechanical strength, and rubber elasticity, it can be widely used as a material for manufacturing parts in automobiles, electrical and electronic materials, and other industrial fields.

Description of Embodiments

The present invention is described in detail in the following embodiments and examples. The present invention is not limited to these embodiments and examples.
In the present specification, unless otherwise specified, numerical values before and after "to" mean that these values are included as a lower limit and an upper limit.

[Polycarbonate resin composition]

The polycarbonate resin composition of the present invention contains a carbonate structural unit (X) (hereinafter, sometimes simply referred to as "carbonate structural unit (X)") derived from an aliphatic dihydroxy compound represented by the following formula (1), i.e., polytrimethylene ether glycol (PO3G), and a carbonate structural unit (Y) (hereinafter, sometimes simply referred to as "carbonate structural unit (Y)") derived from a dihydroxy compound (2) satisfying the following requirement I, and has a melting point peak temperature when the melting point peak temperature is measured using a differential scanning calorimeter and heating the polycarbonate resin composition at a heating rate of 20°C/min.

<Requirement I>

A polycarbonate resin (2) obtained by polymerizing the dihydroxy compound (2) and a carbonate source by a transesterification method has a melting point peak temperature when the melting point peak temperature is measured using a differential scanning calorimeter and heating the polycarbonate resin (2) at a heating rate of 20°C/min.

[Chem. 4]

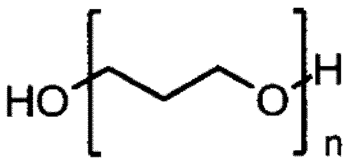

(1)

(In the formula (1), n is an integer of 2 or more.)

<PO3G>

PO3G used as the raw material for the carbonate structural unit (X) is preferably PO3G having a biomass degree of 100%, which is synthesized by condensing **1,3-**propanediol produced from plant-derived raw materials.

Whether PO3G and the like is produced from plant-derived resources can be confirmed, for example, by measuring the concentration of radioactive carbon ($^{14}C$).

The number average molecular weight of PO3G is preferably 400 or more and 2,900 or less. The lower limit of the number average molecular weight of PO3G is more preferably 420 or more, and particularly preferably 450 or more. The upper limit of the number average molecular weight of PO3G is more preferably 2,850 or less, and particularly preferably 2,800 or less. Therefore, n in the above formula (1) is preferably a number that satisfies this number average molecular weight.

In the polycarbonate resin composition of the present invention, the carbonate structural unit (X) derived from PO3G forms a soft segment, and the carbonate structural unit (Y) derived from the dihydroxy compound (2) forms a hard segment, thereby expressing flexibility, heat resistance, mechanical strength, and rubber elasticity.

When the number average molecular weight of PO3G is equal to or more than the above lower limit, soft segments and hard segments are more easily formed, and it tends to be easier to achieve both heat resistance and flexibility. When the number average molecular weight of PO3G is equal to or less than the above upper limit, it has good compatibility with the dihydroxy compound (2), and can prevent problems such as poor compatibility leading to poor transparency and poor polymerization.

The number average molecular weight of PO3G can be calculated by a measurement method using $^{1}H$-NMR, a method of determining from the hydroxyl value of the terminal group, or the like.

<Dihydroxy Compound (2)>

The dihydroxy compound (2) that is the raw material for the carbonate structural unit (Y) satisfies the following requirement I.

<Requirement I>

A polycarbonate resin (2) obtained by polymerizing the dihydroxy compound (2) and a carbonate source by a transesterification method has a melting point peak temperature when the melting point peak temperature is measured using a differential scanning calorimeter and heating the polycarbonate resin (2) at a heating rate of 20°C/min.

In the above requirement I, the method of producing the polycarbonate resin (2) by polymerizing the dihydroxy compound (2) and a carbonate source by a transesterification method can be specifically carried out in the same manner as the melt transesterification method in the method of producing the polycarbonate resin composition of the present invention described later. Examples of carbonate sources used in this method include those exemplified as carbonate esters in the melt transesterification method described later.

The fact above described "the polycarbonate resin (2) has a melting point peak temperature" means that "the polycarbonate resin (2) has crystallinity". When a dihydroxy compound (2) can be used to produce the polycarbonate resin (2) having crystallinity, it is possible to produce a polycarbonate resin composition of the present invention having a melting

point peak temperature as described later, and it is possible to provide a polycarbonate resin composition having excellent heat resistance, flexibility, mechanical strength, low-temperature mechanical strength, and rubber elasticity.

In the measurement of the melting point peak temperature using a differential scanning calorimeter, the polycarbonate resin (2) obtained by polymerization by a transesterification method may be directly subjected to the measurement of the melting point peak temperature, or the polycarbonate resin may be dissolved in a solvent and the solvent dried and removed to obtain a polycarbonate resin (2), and the melting point peak temperature may be measured for the polycarbonate resin (2).

In other words, the polycarbonate resin (2) may itself be crystalline immediately after production, or may be crystalline by dissolving it in a solvent after production, drying and removing the solvent, and crystallizing it.

The solvent used in this case may be any solvent capable of dissolving the polycarbonate resin (2), and examples of the solvent include those used in the method of mixing the polycarbonate resin (a) and the polycarbonate resin (b) in a solution state, which will be described later.

In addition, there are no particular limitations on the concentration of the polycarbonate resin (2) in the solution and the drying method.

Examples of the method for removing the solvent from the resin solution after dissolving the polycarbonate resin (2) include a method of leaving the resin solution at rest for a certain period of time under normal pressure or a slight reduced pressure, and a method of heating the resin solution at normal pressure or a slight reduced pressure to a temperature equal to or higher than the boiling point of the solvent used.

It is preferable that the polycarbonate resin (2) itself has crystallinity immediately after production (the polycarbonate resin (2) has a melting point peak temperature when the polycarbonate resin (2) obtained by polymerizing by a transesterification method is directly subjected to measurement of the melting point peak temperature), because it has higher crystallinity than the polycarbonate resin (2) that has become crystalline by dissolving it in a solvent after production and drying and removing the solvent.

There are no particular restrictions on the melting point peak temperature of the polycarbonate resin (2), but for the same reasons as the melting point peak temperature of the polycarbonate resin composition of the present invention described later, it is preferably 150°C or higher, more preferably 165°C or higher, and even more preferably 180°C or higher, and preferably 300°C or lower, and more preferably 260°C or lower.

In the case where the polycarbonate resin (2) has a plurality of melting point peak temperatures, it is preferable that at least the higher melting point peak temperature is within the above range.

The melting point peak temperature of the polycarbonate resin (2) is the melting point peak temperature obtained by heating the polycarbonate resin (2) at a heating rate of 20°C/min using a differential scanning calorimeter, measuring the calorific value, and taking the temperature at the apex of the melting peak, and specifically, is measured by the method described in the Examples section below.

The dihydroxy compound (2) may be any compound that satisfies the above requirement I, and is not particularly limited. One example of such a compound is the dihydroxy compound represented by the following formula (2).

[Chem. 5]

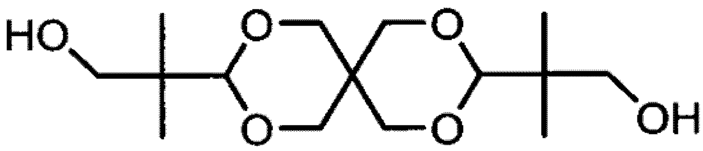

(2)

The dihydroxy compound represented by the above formula (2) itself has crystallinity when made into the polycarbonate resin (2). It is particularly preferable from the viewpoints of high crystallinity and compatibility between heat resistance, flexibility, and mechanical strength.

As the dihydroxy compound (2), an aromatic dihydroxy compound represented by the following formula (II) can also be used.

[Chem. 6]

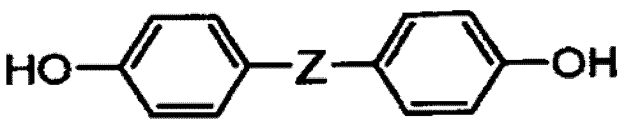

(II)

(In formula (II), Z represents a single bond, -O-, -S-, or $-CR^1R^2-$. $R^1$ and $R^2$ each independently represent a hydrogen atom, a substituted or unsubstituted alkyl group having 1 to 20 carbon atoms, or a substituted or unsubstituted aryl group. The alkyl groups of $R^1$ and $R^2$ may be bonded to each other to form a ring.)

In the formula (II), the substituted or unsubstituted alkyl groups of $R^1$ and $R^2$ in $-CR^1R^2-$ preferably each independently represent an alkyl group having 1 to 20 carbon atoms.

Specific examples of the alkyl group include the following.

Methyl group, ethyl group, n-propyl group, n-butyl group, n-pentyl group, n-hexyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, n-heptadecyl group, n-octadecyl group, n-nonadecyl group, n-icosyl group;

methylethyl group, methylpropyl group, methylbutyl group, methylpentyl group, methylhexyl group, methylheptyl group, methyloctyl group, methylnonyl group, methyldecyl group, methylundecyl group, methyldodecyl group, methyltridecyl group, methyltetra Decyl group, methylpentadecyl group, methylhexadecyl group, methylheptadecyl group, methyloctadecyl group, methylnonadecyl group;

dimethylethyl group, dimethylpropyl group, dimethylbutyl group, dimethylpentyl group, dimethylhexyl group, dimethylheptyl group, dimethyloctyl group, dimethylnonyl group, dimethyldecyl group, dimethylundecyl group, dimethyldodecyl group, dimethyltridecyl group, dimethyltetradecyl group, dimethylpentadecyl group, dimethylhexadecyl group, dimethylheptadecyl group, dimethyloctadecyl group;

trimethylbutyl group, trimethylpentyl group, trimethylhexyl group, trimethylheptyl group, trimethyloctyl group, trimethylnonyl group, trimethyldecyl group, trimethylundecyl group, trimethyldodecyl group, trimethyltridecyl group, trimethyltetradecyl group, trimethylpentadecyl group, trimethylhexadecyl group, trimethylheptadecyl group;

ethylpentyl group, ethylhexyl group, ethylheptyl group, ethyloctyl group, ethylnonyl group, ethyldecyl group, ethylundecyl group, ethyldodecyl group, ethyltridecyl group, ethyltetradecyl group, ethylpentadecyl group, ethylhexadecyl group, ethylheptadecyl group, ethyloctadecyl group;

propylhexyl group, propylheptyl group, propyloctyl group, propylnonyl group, propyldecyl group, propylundecyl group, propyldodecyl group, propyltridecyl group, propyltetradecyl group, propylpentadecyl group, propylhexadecyl group, propylheptadecyl group;

butylhexyl group, butylheptyl group, butyloctyl group, butylnonyl group, butyldecyl group, butylundecyl group, butyldodecyl group, butyltridecyl group, butyltetradecyl group, butylpentadecyl group, butylhexadecyl group:

When these alkyl groups are bonded to each other to form a ring, examples of $-CR^1R^2-$ imclude unsubstituted cycloalkylidene groups (preferably cycloalkylidene groups having 4 to 12 carbon atoms) such as cyclopentylidene group, cyclohexylidene group, cycloheptylidene group, cyclododecylidene group, adamantylidene group, or the like. Examples of substituted cycloalkylidene groups include these cycloalkylidene groups substituted with methyl group, ethyl group, or the like.

Examples of the aryl group of $R^1$ and $R^2$ include phenyl group, tolyl group, 4-methylphenyl group, naphthyl group, and the like.

$R^1$ and $R^2$ are preferably each independently a hydrogen atom, a methyl group, or an ethyl group, more preferably a hydrogen atom or a methyl group. It is particularly preferable that $R^1$ and $R^2$ are both a hydrogen atom or a methyl group.

Specific examples of aromatic dihydroxy compounds represented by the formula (II) include 4,4'-dihydroxydiphenyl ether (hereinafter sometimes abbreviated as "DHDE") represented by the following formula (3), bis(4-hydroxyphenylmethane (=bisphenol F) (hereinafter sometimes abbreviated as "BPF") represented by the following formula (4), 4,4'-thiodiphenol (hereinafter sometimes abbreviated as "ThioDP") represented by the following formula (5), and 2,2-bis(4-hydroxyphenyl)propane (=bisphenol A) (hereinafter sometimes abbreviated as "BPA") represented by the following formula (6). Aromatic dihydroxy compounds represented by the following formulas (3) to (5) themselves have crystallinity when made into the polycarbonate resin (2). The aromatic dihydroxy compound represented by the following formula (6) itself dose not usually have crystallinity when made into the polycarbonate resin (2), but become crystalline when dissolved in a solvent and the solvent is dried and removed. From the viewpoint of crystallinity, aromatic dihydroxy compounds represented by the following formulas (3) to (5) are more preferred.

[Chem. 7]

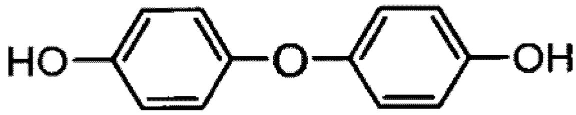

(3)

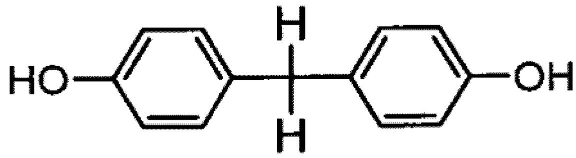

(4)

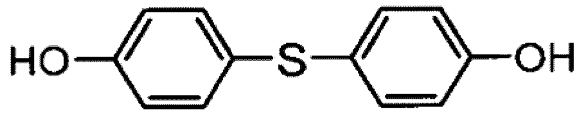

(5)

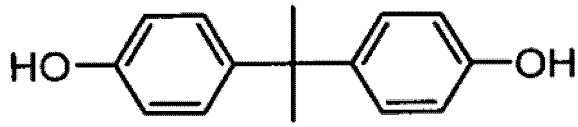

(6)

< Form of inclusion of Carbonate structural unit (X) and carbonate structural unit (Y)>

There are no particular limitations on the form of inclusion of the carbonate structural unit (X) and the carbonate structural unit (Y) in the polycarbonate resin composition of the present invention.

Usually, the carbonate structural unit (X) and the carbonate structural unit (Y) are contained in a polycarbonate resin.

The polycarbonate resin composition of the present invention may be a polycarbonate resin mixture of a polycarbonate resin containing the carbonate structural unit (X) and a polycarbonate resin containing the carbonate structural unit (Y). The polycarbonate resin composition of the present invention may contain a copolymerized polycarbonate resin that simultaneously contains the carbonate structural units (X) and the carbonate structural unit (Y).

The polycarbonate resin composition of the present invention may be a mixture of a polycarbonate resin that contains the carbonate structural unit (X) and/or the carbonate structural unit (Y), and a copolymerized polycarbonate resin that contains the carbonate structural unit (X) and the carbonate structural unit (Y).

The polycarbonate resin composition of the present invention may further contain a polycarbonate resin that contains neither the carbonate structural unit (X) nor the carbonate structural unit (Y).

When the polycarbonate resin composition of the present invention contains the carbonate structural unit (X) and the carbonate structural unit (Y) as a copolymerized polycarbonate resin containing the carbonate structural unit (X) and the carbonate structural unit (Y), the polycarbonate resin composition of the present invention is referred to as a "polycarbonate resin".

When the polycarbonate resin composition of the present invention is a mixture of a polycarbonate resin containing carbonate structural units (X) and a polycarbonate resin containing carbonate structural units (Y), it is usually called a "polycarbonate resin composition". The same applies to the other inclusion forms mentioned above.

In the present invention, the term "polycarbonate resin composition" includes cases where the composition is composed of one type of copolymerized polycarbonate resin containing the carbonate structural unit (X) and the carbonate structural unit (Y).

However, in the Examples and Comparative Examples given below, a single copolymerized polycarbonate resin was produced, and is therefore referred to as a "polycarbonate resin."

<Content of each carbonate structural unit (X) and carbonate structural unit (Y)>

The content of the carbonate structural unit (X) in 100 wt% of all carbonate structural units in the polycarbonate resin composition of the present invention is preferably 1 wt% or more and 99 wt% or less. (Hereinafter, the content of

carbonate structural units such as the carbonate structural unit (X) and the carbonate structural unit (Y) is shown as a weight percentage relative to 100 wt% of all carbonate structural units in the polycarbonate resin composition) In addition, the content of the carbonate structural unit (Y) is preferably 0.1 wt% or more and 99 wt% or less.

By containing 1 wt% or more and 99 wt% or less of the carbonate structural unit (X) and 0.1 wt% or more and 99 wt% or less of the carbonate structural unit (Y), the polycarbonate resin composition of the present invention can have excellent resistance, flexibility, mechanical strength, low-temperature mechanical strength, and rubber elasticity.

From the viewpoints of flexibility and mechanical strength, the content of the carbonate structural unit (X) in the polycarbonate resin composition of the present invention is preferably 1 wt% or more, more preferably 20 wt% or more, even more preferably 25 wt%, particularly preferably 27 wt% or more, and especially preferably 35 wt% or more, and the content of the carbonate structural unit (Y) is preferably 99 wt% or less, more preferably 80 wt% or less, even more preferably 75 wt% or less, particularly preferably 73 wt% or less, and especially preferably 65 wt% or less.

From the viewpoint of heat resistance, the content of the carbonate structural unit (X) is preferably 99 wt% or less, more preferably 80 wt% or less, even more preferably 77 wt% or less, particularly preferably 75 wt% or less, and especially preferably 69 wt% or less, and the content of the carbonate structural unit (Y) is preferably 0.1 wt% or more, more preferably 20 wt% or more, even more preferably 23 wt% or more, particularly preferably 31 wt% or more, and especially preferably 37 wt% or more.

From the viewpoint of more reliably obtaining the effects of heat resistance, flexibility, mechanical strength, low-temperature mechanical strength, and rubber elasticity due to including of the carbonate structural unit (X) and the carbonate structural unit (Y), the sum of the content of the carbonate structural unit (X) and the content of the carbonate structural unit (Y) in 100 wt% of all carbonate structural units in the polycarbonate resin composition of the present invention is preferably 70 wt% or more, more preferably 75 wt% or more, and even more preferably 90 to 100 wt%.

The polycarbonate resin composition of the present invention may contain one type of molecular weight grade or two or more types of molecular weight grades as polytrimethylene ether glycol (PO3G) of the carbonate structural unit (X). The carbonate structural unit (Y) may also be one type or two or more types. That is, the polycarbonate resin composition of the present invention may contain the carbonate structural units (Y) derived from two or more dihydroxy compounds (2).

The content of each carbonate structural unit (X) and (Y) in the polycarbonate resin composition of the present invention can be determined as the ratio of each dihydroxy compound, i.e., PO3G and the dihydroxy compound (2), to the total dihydroxy compounds used in the production of the polycarbonate resin composition of the present invention. The same applies to other carbonate structural units described below.

<Other carbonate structural units>

The polycarbonate resin composition of the present invention may contain other carbonate structural units other than the carbonate structural unit (X) and the carbonate structural unit (Y), i.e., carbonate structural units derived from aromatic or aliphatic dihydroxy compounds other than polytrimethylene ether glycol (PO3G) and the dihydroxy compound (2), within a range that does not impair the object of the present invention.

The other carbonate structural units may be included as a copolymerized polycarbonate resin containing the carbonate structural unit (X) and/or the carbonate structural unit (Y). A polycarbonate resin consisting of the other carbonate structural units may be mixed with a polycarbonate resin containing the carbonate structural unit (X) and/or the carbonate structural unit (Y).

When the polycarbonate resin composition of the present invention includes other carbonate structural units, the content of the other carbonate structural units in 100 wt% of all carbonate structural units of the polycarbonate resin composition is preferably 30 wt% or less, more preferably 25 wt% or less, and particularly preferably 10 wt% or less.

When the polycarbonate resin composition contains the other carbonate structural units, it may be possible to obtain improving effects such as a lower water absorption rate and improved light resistance due to the other carbonate structural units. However, when the content of the other carbonate structural units is too high, the effects of the present invention, such as improved in heat resistance, flexibility, mechanical strength, low-temperature mechanical strength, and rubber elasticity, which are achieved by containing the carbonate structural units (X) and (Y), may be impaired.

The polycarbonate resin composition of the present invention may contain only one type of the other carbonate structural units, or may contain two or more types thereof.

<Other components>

The polycarbonate resin composition of the present invention may contain other component in addition to the polycarbonate resin containing the carbonate structural unit (X) and/or the carbonate structural unit (Y) as long as desired physical properties are not significantly impaired. Examples of the other component include a polycarbonate resin that contains neither the carbonate structural unit (X) nor the carbonate structural unit (Y), a resin other than polycarbonate resins, and a resin additive agent of various kinds.

Examples of the resin additive agent include a heat stabilizer, an antioxidant, a release agent, a light stabilizer (HALS), a flame retardant, an antistatic agent, an anti-fogging agent, a lubricant, an anti-blocking agent, a flow modifier, a plasticizer, a dispersant, an antimicrobial agent, a dye, a pigment, or the like.

One type of the resin additive agent may be contained, or two or more types thereof may be contained in any combination and ratio.

Examples of the other resin include a thermoplastic polyester resin such as polyethylene terephthalate resin, polytrimethylene terephthalate resin, and polybutylene terephthalate resin, and the like; styrenic resins such as polystyrene resin, high impact polystyrene resin (HIPS), acrylonitrile-styrene copolymer (AS resin), acrylonitrile-styrene-acrylic rubber copolymer (ASA resin), acrylonitrile-ethylenepropylene rubber-styrene copolymer (AES resin), and the like; polyolefin resins such as polyethylene resin, polypropylene resin, and the like; polyamide resin; polyimide resin; polyetherimide resin; polyurethane resin; polyphenylene ether resin; polyphenylene sulfide resin; polysulfone resin; polymethacrylate resin, and the like.

One type of the other resin may be contained, or two or more types thereof may be contained in any combination and ratio.

When the polycarbonate resin composition of the present invention is blended with the thermoplastic resin composition of the present invention described below as an additive for improving an impact resistance or the like, the polycarbonate resin composition of the present invention preferably contains the carbonate structural unit (X) and the carbonate structural unit (Y) in a total amount of 70 wt% or more based on 100 wt% of the polycarbonate resin composition.

<Melting point peak temperature of the polycarbonate resin composition>

The polycarbonate resin composition of the present invention has a melting point peak temperature, in other words, it has crystallinity, when it has a melting point peak temperature wherein the melting point peak temperature is measured using a differential scanning calorimeter and under a condition of a heating rate of 20°C/min.

"The polycarbonate resin composition having a melting point peak temperature" as described above means that "the polycarbonate resin composition has crystallinity". In the measurement of the melting point peak temperature using a differential scanning calorimeter, the polycarbonate resin composition is directly subjected to the measurement of the melting point peak temperature, and does not include the case where the melting point peak temperature is measured for a polycarbonate resin composition obtained dissolving a polycarbonate resin in a solvent and then drying and removing the solvent.

When the polycarbonate resin composition of the present invention has a melting point peak temperature as measured by the above mentioned differential scanning calorimeter, excellent rubber elasticity is obtained by pseudo-crosslinking, so that a polycarbonate resin composition having excellent heat resistance, flexibility, mechanical strength, low-temperature mechanical strength, and rubber elasticity can be provided.

The melting point peak temperature of the polycarbonate resin composition of the present invention is not particularly limited, but the melting point peak temperature obtained by heating the polycarbonate resin composition of the present invention at a heating rate of 20°C/min using a differential scanning calorimeter, measuring the heat quantity, and taking the temperature at the apex of the melting peak is preferably 150°C or higher, more preferably 165°C or higher, and even more preferably 180°C or higher. When the melting point peak temperature is equal to or higher than the lower limit, the heat resistance is excellent and this is preferred. The upper limit of the melting point peak temperature of the polycarbonate resin composition of the present invention is preferably 240°C or lower, and more preferably 230°C or lower, from the viewpoint of moldability.

When the polycarbonate resin composition of the present invention has a plurality of melting point peak temperatures, it is preferred that at least the higher melting point peak temperature is within the above range.

Specifically, the melting point peak temperature of the polycarbonate resin composition of the present invention is measured by the method described in the Examples section below.

<Molecular weight of the polycarbonate resin composition>

The molecular weight of the polycarbonate resin composition of the present invention is preferably 10,000 or more and 100,000 or less, in terms of number average molecular weight (Mn) (polystyrene equivalent molecular weight) measured by GPC (gel permeation chromatography). When the number average molecular weight (Mn) is equal to or more than the above lower limit, the mechanical properties of the polycarbonate resin composition of the present invention are good, and this is preferred. When the number average molecular weight is equal to or less than the above upper limit, the flowability and moldability of the polycarbonate resin composition of the present invention tend to be good, and this is preferred.

From those viewpoints, the number average molecular weight (Mn) of the polycarbonate resin composition of the present invention is more preferably 15,000 or more, and more preferably 90,000 or less, and even more preferably 80,000

or less. In addition, in the GPC (gel permeation chromatography) measurement, the degree of polymerization of a polycarbonate resin composition that cannot be measured by GPC because it is insoluble in a solvent can be evaluated by the flowability (Q value) shown below.

<Flowability (Q value) of the polycarbonate resin composition>

The polycarbonate resin composition of the present invention has a value (Q value) indicating the flowability, which is an index of moldability, of preferably $3\times10^{-2}$cm$^3$/sec or more, more preferably $5\times10^{-2}$cm$^3$/sec or more, and even more preferably $10\times10^{-2}$cm$^3$/sec or more, when measured using a raised-type flowtester under conditions of 240°C and 160 kgf. When the Q value is equal to or more than the above lower limit, the composition has excellent fluidity and moldability. On the other hand, the Q value is preferably $200\times10^{-2}$ cm$^3$/sec or less, more preferably $190\times10^{-2}$ cm$^3$/sec or less, and even more preferably $180\times10^{-2}$ cm$^3$/sec or less. When the Q value is equal to or lower than the above upper limit, the composition has excellent mechanical strength.

<Glass transition temperature of the polycarbonate resin composition>

There is no particular restriction on the glass transition temperature of the polycarbonate resin composition of the present invention, but the glass transition temperature of the polycarbonate resin composition of the present invention, which is determined by measuring the amount of heat by heating the composition at a heating rate of 20°C/min using a differential scanning calorimeter, is preferably 30°C or lower, more preferably 20°C or lower, and even more preferably 10°C or lower. When the glass transition temperature is equal to or lower than the above upper limit, the composition has excellent low-temperature mechanical strength and rubber elasticity. There is no particular restriction on the lower limit of the glass transition temperature of the polycarbonate resin composition of the present invention, but it is usually - 100°C or higher.

When the polycarbonate resin composition of the present invention has a plurality of glass transition temperatures, it is preferable that at least the lower glass transition temperature is within the above range.

<Tensile modulus and breaking elongation of the polycarbonate resin composition>

The tensile modulus of the polycarbonate resin composition of the present invention is not particularly limited, but it is preferable that it has a flexibility of 5 MPa or more and 300 MPa or less.

The breaking elongation of the polycarbonate resin composition of the present invention is not particularly limited, but it is preferable that it is 80% or more from the viewpoint of mechanical strength.

The tensile modulus and breaking elongation of the polycarbonate resin composition of the present invention are measured by the method described in the Examples section below for a test sample obtained by hot pressing to obtain a square pressed piece having a thickness of 0.5 mm and a length and a width of 70 mm, and then cutting it with scissors to a thickness of 0.5 mm, a length of 70 mm, and a width of 10 mm.

<Recovery rate and tensile permanent set of the polycarbonate resin composition>

The recovery rate and tensile permanent set of the polycarbonate resin composition of the present invention are not particularly limited, but it is preferable that the polycarbonate resin composition has rubber elasticity such that the recovery rate is 90% or more and the tensile permanent set is 40% or less.

The recovery rate and tensile permanent set of the polycarbonate resin composition of the present invention are measured by the method described in the Examples section below for a test sample obtained by hot pressing to obtain a square pressed piece having a thickness of 0.5 mm and a length and a width of 70 mm, and then cutting it with scissors to a thickness of 0.5 mm, a length of 70 mm, and a width of 10 mm.

<Biomass degree of the polycarbonate resin composition>

The biomass degree of the polycarbonate resin composition of the present invention is defined as the mass ratio of carbonate structural units synthesized from plant-derived resources among the carbonate structural units contained in the polycarbonate resin composition of the present invention. The polycarbonate resin composition of the present invention preferably has a biomass ratio of 10 wt% or more, and more preferably 25 wt% or more.

[Method for producing the polycarbonate resin composition]

<Method for producing the polycarbonate resin>

The polycarbonate resin constituting the polycarbonate resin composition of the present invention can be produced by a conventionally known polymerization method, and the polymerization method is not particularly limited. Examples of the polymerization method include an interfacial polymerization method, a melt transesterification method, a pyridine method, a ring-opening polymerization method of a cyclic carbonate compound, and a solid-phase transesterification method of a prepolymer. Among these, a melt transesterification method and an interfacial polymerization method are preferred, and a melt transesterification method is more preferred. Particularly suitable methods among these methods are more specifically described below.

(Melt transesterification method)

In the melt transesterification method, for example, a transesterification reaction is carried out between a carbonate ester and a raw material dihydroxy compound.

By using a raw dihydroxy compound containing PO3G and the dihydroxy compound (2), a copolymerized polycarbonate resin containing the carbonate structural unit (X) and the carbonate structural unit (Y) can be produced. By using one of these dihydroxy compounds, a polycarbonate resin containing the carbonate structural unit (X) or the carbonate structural unit (Y) can be produced.

When producing a polycarbonate resin containing the above mentioned other carbonate structural units, one or more dihydroxy compounds other than PO3G and the dihydroxy compound (2) may be used.

Examples of the carbonate ester include compounds represented by the following formula (7), such as aryl carbonates, dialkyl carbonates, biscarbonates of dihydroxy compounds, monocarbonates of dihydroxy compounds, and carbonates of dihydroxy compounds, such as cyclic carbonates.

[Chem. 8]

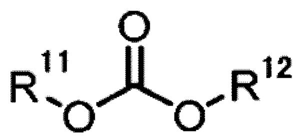

(7)

In the above formula (7), $R^{11}$ and $R^{12}$ each independently denote an alkyl group having 1 to 30 carbon atoms, an aryl group, or an arylalkyl group, which may have a substituent.

When $R^{11}$ and $R^{12}$ independently denote an alkyl group or an arylalkyl group, the compound is hereinafter sometimes referred to as a dialkyl carbonate, and when $R^{11}$ and $R^{12}$ independently denote an aryl group, the compound is hereinafter sometimes referred to as a diaryl carbonate.

In terms of reactivity with the dihydroxy compound, both $R^{11}$ and $R^{12}$ preferably denote an aryl group which may have a substituent, more preferably a diaryl carbonate represented by the following formula (8).

[Chem. 9]

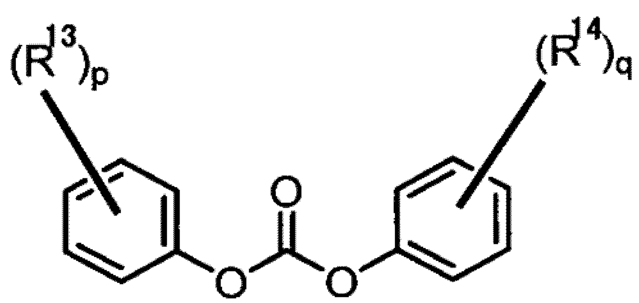

(8)

In the above formula (8), $R^{13}$ and $R^{14}$ independently denote a halogen atom, a nitro group, a cyano group, an alkyl group having 1 to 20 carbon atoms, an alkoxycarbonyl group having 1 to 20 carbon atoms, a cycloalkyl group having 4 to 20 carbon atoms, or an aryl group having 6 to 20 carbon atoms. p and q independently denote an integer in the range of 0 to 5.

Specific examples of the carbonate ester include dialkyl carbonates, such as dimethyl carbonate, diethyl carbonate, and di-t-butyl carbonate, and optionally substituted diaryl carbonate, such as diphenyl carbonate (hereinafter sometimes abbreviated to "DPC"), bis(4-methylphenyl)carbonate, bis(4-chlorophenyl)carbonate, bis(4-fluorophenyl) carbonate, bis(2-chlorophenyl)carbonate, bis(2,4-difluorophenyl)carbonate, bis(4-nitrophenyl)carbonate, bis(2-nitrophenyl)carbonate, bis(methylsalicylphenyl)carbonate, and ditolyl carbonate. Among these, diphenyl carbonate is preferred.

These carbonate esters may be used alone or in combination of two or more.

Preferably 50% or less by mole, more preferably 30% or less by mole, of the carbonate ester may be substituted with dicarboxylic acid or dicarboxylic acid ester. Typical examples of the dicarboxylic acid or dicarboxylic acid ester include terephthalic acid, isophthalic acid, diphenyl terephthalate, and diphenyl isophthalate. Substitution with such a dicarboxylic acid or dicarboxylic acid ester yields a polyester carbonate.

The ratio of the raw material dihydroxy compound to the carbonate ester may be any ratio that can result in a desired polycarbonate resin. The carbonate ester is preferably used in a slightly smaller amount or a slightly excess amount with respect to the raw material dihydroxy compound in polymerization with the dihydroxy compound. That is, the carbonate ester is preferably used in an amount of 0.95 to 1.30 times (molar ratio), more preferably 0.98 to 1.20 times (molar ratio), relative to the dihydroxy compound.

When the molar ratio is too small, the resulting polycarbonate resin will have a large number of terminal OH groups, and the thermal stability of the resin will tend to deteriorate. When the molar ratio is too large, the reaction rate of transesterification will decrease, making it difficult to produce the polycarbonate resin having the desired molecular weight, or increasing the amount of carbonate ester remaining in the resin, which may cause odor during molding or in molded product.

A transesterification catalyst is typically used to produce a polycarbonate resin by the melt transesterification method. The transesterification catalyst is not limited, and may be a known transesterification catalyst. For example, an alkali metal compound and/or an alkaline-earth metal compound is preferably used. In an auxiliary manner, a basic compound such as a basic boron compound, a basic phosphorus compound, a basic ammonium compound, an amine compound or the like may be used together.

The transesterification catalysts may be used alone or in any combination of two or more in any ratio.

In the melt transesterification method, the reaction temperature is typically, but not limited to, in the range of 100°C to 300°C.

The reaction pressure is typically, but not limited to, a reduced pressure of 2 mmHg or less.

In specific procedures, a melt polycondensation reaction may be performed under the conditions described above while removing by-products.

The polycarbonate resin composition of the present invention is significantly affected by thermal history and oxidation in the presence of an alkaline catalyst whereby having poor hue. It is therefore preferred to set the reaction temperature at 300°C or lower. In addition thereto, it is preferred to select a reduced-pressure condition with a lower limit of approximately 0.05 mmHg to prevent oxygen from leaking into an apparatus due to an excessively reduced pressure.

The reaction may be performed batch-wise or continuously. In a batch-wise reaction, a reaction substrate (reaction raw material), a catalyst, and an additive agent, and the like are mixed in any order provided that a desired polycarbonate resin can be produced. Thus, the order may be appropriately determined.

When necessary, the melt transesterification method may use a catalyst deactivator. The catalyst deactivator may be any compound that can neutralize the transesterification catalyst. Examples of the catalyst deactivator include sulfur-containing acidic compounds and derivatives thereof and phosphorus-containing acidic compounds and derivatives thereof.

The catalyst deactivators may be used alone or in any combination of two or more in any ratio.

The amount of catalyst deactivator to be used is typically, but not limited to, 0.5 equivalent or more, preferably 1 equivalent or more, more preferably 3 equivalent or more, and typically 50 equivalent or less, preferably 10 equivalent or less, more preferably 8 equivalent or less, based on the transesterification catalyst.

The amount of catalyst deactivator to be used is typically 1 ppm or more and 1000 ppm or less, and preferably 500 ppm or less, based on the polycarbonate resin.

<Method for producing the polycarbonate resin composition>

When the polycarbonate resin composition of the present invention is a polycarbonate resin composition containing two or more polycarbonate resins, there are no particular limitations on the method for producing the polycarbonate resin composition of the present invention wherein the method comprises mixing multiple polycarbonate resins, such as two kinds of polycarbonate resins of a polycarbonate resin (a) and a polycarbonate resin (b). Examples of the polycarbonate resin composition containing two or more polycarbonate resins include a mixture of the polycarbonate resin containing the carbonate structural unit (X) and the polycarbonate resin containing the carbonate structural unit (Y), a

mixture of a polycarbonate resin containing the carbonate structural unit (X) and/or the carbonate structural unit (Y), a copolymerized polycarbonate resin containing the carbonate structural unit (X) and the carbonate structural unit (Y), and a mixture further containing a polycarbonate resin that contains neither the carbonate structural unit (X) nor the carbonate structural unit (Y). However, examples of the method for producing the polycarbonate resin composition of the present invention may include the following methods 1) to 4), and the like.

1) A method of melt-kneading the polycarbonate resin (a) and the polycarbonate resin (b);

2) A method of melt-kneading the molten polycarbonate resin (a) and the molten polycarbonate resin (b);

3) A method of mixing the polycarbonate resin (a) and the polycarbonate resin (b) in a solution state;

4) A method of dry blending the polycarbonate resin (a) and the polycarbonate resin (b).

Each method will be explained below.

1) The method of melt-kneading the polycarbonate resin (a) and the polycarbonate resin (b)

Pellets or granules of the polycarbonate resin (a) and pellets or granules of the polycarbonate resin (b) are melt-kneaded using a mixing device such as a kneader, a twin-screw extruder, a single-screw extruder, and the like. The pellets or powder of the polycarbonate resin (a) and the pellets or powder of the polycarbonate resin (b) may be mixed in advance in a solid state and then kneaded. Any one may be melted in the mixing device first, and the remaining polycarbonate resin may be added thereto and kneaded.

Although there is no particular restriction on the kneading temperature, it is preferably 200°C or higher, more preferably 220°C or higher, and still more preferably 230°C or higher. Further, the temperature is preferably 320°C or lower, and particularly preferably 300°C or lower. When the kneading temperature is too low, the polycarbonate resin (a) and the polycarbonate resin (b) will not be completely mixed, which is not preferable because it may cause variations in hardness and impact resistance when molded products are produced. When the kneading temperature is too high, the color tone of the polycarbonate resin composition may deteriorate, which is not preferable.

2) The method of melt-kneading the molten polycarbonate resin (a) and the molten polycarbonate resin (b)

The molten polycarbonate resin (a) and the molten polycarbonate resin (b) are mixed in a mixing device such as a stirring tank, a static mixer, a kneader, a twin-screw extruder, a single-screw extruder, and the like. When the polycarbonate resin is obtained by a melt polymerization method, it may be introduced into the mixing device in a molten state without being cooled or solidified.

3) The method of mixing the polycarbonate resin (a) and the polycarbonate resin (b) in a solution state

In this method, the polycarbonate resin (a) and the polycarbonate resin (b) are dissolved in a suitable solvent to form a solution, mixed in a solution state, and then isolated as a polycarbonate resin composition.

Suitable solvents include, for example, aliphatic hydrocarbons such as hexane, n-heptane, and the like; chlorinated aliphatic carbons such as dichloromethane, chloroform, carbon tetrachloride, dichloroethane, trichloroethane, tetrachloroethane, dichloropropane, 1,2-dichloroethylene, and the like; aromatic hydrocarbons such as benzene, toluene, xylene, and the like; and substituted aromatic hydrocarbons such as nitrobenzene, acetophenone, and the like. Among these, chlorinated hydrocarbons such as dichloromethane or chlorobenzene are preferably used. These solvents can be used alone or in mixtures with other solvents.

Examples of the mixing device include a stirring tank and a static mixer. The mixing temperature is not particularly limited as long as the polycarbonate resin (a) and the polycarbonate resin (b) are dissolved, but the mixing temperature is usually equal to below the boiling point of the solvent used.

4) The method of dry blending the polycarbonate resin (a) and the polycarbonate resin (b)

In this method, pellets or granules of the polycarbonate resin (a) and pellets or granules of the polycarbonate resin (b) are dry-blended using a tumbler, a super mixer, Henschel mixer, Nauta mixer, and the like.

Among the methods 1) to 4) above, the methods 1) and 2) in which the polycarbonate resin (a) and the polycarbonate resin (b) are melt-kneaded are preferred; and the method 4) in which the polycarbonate resin (a) and the polycarbonate resin (b) are dry-blended is also preferred.

In any of the above methods for producing the polycarbonate resin composition, a pigment, a dye, a release agent, a heat stabilizer, and the like may be added as appropriate within the range that does not impair the purpose of the present invention.

[Thermoplastic resin composition]

The thermoplastic resin composition of the present invention is a thermoplastic resin composition containing the above mentioned polycarbonate resin composition of the present invention.
The content of the polycarbonate resin composition of the present invention in 100 wt% of the thermoplastic resin composition of the present invention is usually 1 wt% or more and 30 wt% or less, and preferably 5 wt% or more and 25 wt% or less, from the viewpoints of heat resistance, flexibility, mechanical strength, and moldability.
Examples of thermoplastic resins other than the polycarbonate resin composition of the present invention contained in the thermoplastic resin composition of the present invention include other resins that may be contained in the polycarbonate resin composition of the present invention described above. The thermoplastic resin composition of the present invention may contain the additives that may be contained in the polycarbonate resin composition of the present invention.
The polycarbonate resin composition of the present invention can be blended with a thermoplastic resin composition and used as a physical property improver such as an impact modifier due to its excellent heat resistance, flexibility, mechanical strength, and low-temperature mechanical strength.
As described above, when the polycarbonate resin composition of the present invention is used as an additive such as an impact modifier for a thermoplastic resin composition, it is preferable that the polycarbonate resin composition of the present invention contains the carbonate structural unit (X) and the carbonate structural unit (Y) in a total amount of 70 wt% or more based on the 100 wt% of the polycarbonate resin composition.

[Molded product]

A known extrusion molding device or injection molding device is used to produce a resin molded product from the polycarbonate resin composition or the thermoplastic resin composition of the present invention.
The molding temperature when molding the polycarbonate resin composition or the thermoplastic resin composition of the present invention is preferably 200°C or higher, more preferably 220°C or higher, and even more preferably 230°C or higher. Further, the temperature is preferably 320°C or lower, and more preferably 300°C or lower.
When the molding temperature is too low, the melt viscosity may increase, fluidity may decrease, and moldability may decrease. When the molding temperature is too high, the polycarbonate resin composition or the thermoplastic resin composition will be colored, and the color tone of the resulting molded product may also deteriorate, which is not preferable. In addition, a polycarbonate resin composition containing a structural unit derived from an aliphatic dihydroxy compound such as the carbonate structural unit (X) may decompose at high temperature.
When performing injection molding or extrusion molding, a pigment, a dye, a release agent, a heat stabilizer, and the like can be appropriately added to the polycarbonate resin composition or the thermoplastic resin composition of the present invention within a range that does not impair the purpose of the present invention.

<Injection molded product>

A known injection molding device can be used to produce an injection molded product from the polycarbonate resin composition or the thermoplastic resin composition of the present invention.
The mold temperature when using an injection molding device or the like is preferably 120°C or lower, and more preferably 90°C or lower. Further, the temperature is preferably 20°C or higher, and more preferably 30°C or higher.
When the mold temperature is too high, it is necessary to increase the cooling time during molding, which may lengthen the producing cycle of the molded product and reduce productivity. When the mold temperature is too low, the melt viscosity of the polycarbonate resin composition or the thermoplastic resin composition will become too high, and it may be impossible to obtain a uniform molded product, causing problems such as unevenness on the surface of the molded product, which is not preferable.

<Extrusion molded product>

A known extrusion molding device can be used to produce an extrusion molded product from the polycarbonate resin composition or the thermoplastic resin composition of the present invention. The extrusion molding device is generally equipped with a T die, a round die, and the like, and can produce extrusion molded products of various shapes. Examples of extruded product include a sheet, a film, a plate, a tube, a pipe, and the like. Among these, a sheet or a film is

preferred.

The extrusion molded product of the polycarbonate resin composition or the thermoplastic resin composition of the present invention may be laminated with a hard coat layer on both sides or one side of the extrusion molded product to improve adhesion, paintability, and printability. The extrusion molded product may be heat-laminated with a weather resistance and/or a scratch resistance improving film to both sides or one side of the extruded product. Furthermore, the surface may be subjected to treatments such as graining, translucency, opacity, and the like.

<Applications>

Molded products of the polycarbonate resin composition or the thermoplastic resin composition of the present invention have excellent heat resistance, flexibility, mechanical strength, low-temperature mechanical strength, and rubber elasticity, and can be used in buildings, vehicles, electrical and electronic devices, machinery, and various other fields.

Example

The present invention is more specifically described in the following Examples. The present invention is not limited to these Examples.

[Measurement and Evaluation Methods]

The physical properties of the polycarbonate resins obtained in the following Examples and Comparative Examples were measured and evaluated by the following methods.

(1) Number average molecular weight (Mn), weight average molecular weight (Mw), Mw/Mn

The number average molecular weight (Mn), weight average molecular weight (Mw) (polystyrene equivalent molecular weight), and Mw/Mn were determined by GPC (gel permeation chromatography).

Details are shown below.

Column: Plgel 10um Guard 50×7.5mm, Plgel 10μm MIXED-B 300×7.5mm (Agilent)

Column oven temperature: 40°C

Eluent: Chloroform

Analysis time: 22.5min.

Detection method: RID

Injection volume: 20uL

Calibration method: Polystyrene conversion

Calibration curve approximation: Cubic equation

(2) Q value

As an evaluation of flowability the flow value (Q value) of the resin was evaluated. The measurement was carried out using a CFT-500EX flow tester manufactured by Shimadzu Corporation, using a die having a hole diameter of 1.0 mmφ and a length of 10 mm. And the amount of molten resin(unit: $\times 10^{-2}$ $cm^3$/sec) discharged under the conditions of test temperature**S** of 220°C and 240°C, a test force of 160 kg/cm2, and a preheating time of 180 seconds was measured. The Q value is an index of melt viscosity, and equivalent values indicate equivalent moldability. For those having a melting point peak temperature exceeding 220°C, measurements were performed only at 240°C.

(3) Glass transition temperature (Tg) and melting point peak temperature (Tm)

Measurements were performed using a differential scanning calorimeter (DSC6220, manufactured by SII). The obtained polycarbonate resin was used as the measurement sample without drying. An aluminum sample pan containing approximately 10 mg of a measurement sample was heated from 30°C to 300°C at a heating rate of 20°C/min with a nitrogen gas flow rate of 50 mL/min, and further cooled to -120°C at a cooling rate of 40°C/min. The sample was then heated again to 300°C at a heating rate of 20°C/min.

The differential scanning calorimetry curve obtained from the second heating was analyzed as the measurement curve. The glass transition temperature (Tg) and melting point peak temperature (Tm) were analyzed in accordance with JIS K7121-1987.

An extrapolated glass transition starting temperature was measured. The extrapolated glass transition starting temperature is the temperature at a point of intersection between an extended line of the baseline from the low temperature side to the high temperature side and a tangent line drawn at a point of the maximum gradient of a curve of a stepwise change portion of glass transition. The extrapolated glass transition temperature was defined as the glass transition temperature (Tg). The melting point peak temperature (Tm) was taken as the peak of the melting point peak temperature.

When the peak of the melting point peak temperature or the glass transition temperature was not detected, it was marked as "nd." A lower glass transition temperature (Tg) indicates better low-temperature properties, and a higher melting point peak temperature (Tm) indicates better heat resistance.

(4) Heating test

Approximately 0.5 g of the obtained polycarbonate resin was placed on an aluminum pan and placed in a hot air dryer and heated for 2 hours at 120°C. After heating, when the sample did not deform, it was marked as "o", and when the sample melted or partially melted and stuck to the aluminum pan, it was marked as "×". When it was marked as "◦", it was determined that the sample had high heat resistance.

(5) Tensile modulus and breaking elongation

The obtained polycarbonate resin was dried at 70°C to 80°C for more than 3 hours, and about 3 g of it was pressed for 1 minute by a heat press machine using a SUS spacer having a thickness of 0.5 mm, a length of 70 mm and a width of 70 mm under the conditions of a heat press temperature of 200 to 240°C (285°C was used for Comparative Example 6 due to its high melting point), preheating of 1 to 3 minutes, and a pressure of 1 to 5 MPa, and then removed together with the spacer. Thereafter, it was cooled at room temperature to prepare a pressed piece having a thickness of 0.5 mm. This pressed piece was cut with scissors to a thickness of 0.5 mm, a length of 70 mm, and a width of 10 mm to obtain a strip-shaped test sample.

The obtained test sample was subjected to a tensile test using a tabletop precision universal testing machine "AUTOGRAPH AGS-X (manufactured by Shimadzu Corporation)" with an initial chuck distance of 45 mm and a tensile speed of 50 mm/min to measure the tensile modulus and breaking elongation. The lower the tensile modulus, the better the flexibility. The higher the breaking elongation, the better the mechanical strength.

(6) Bending test of test piece

The pressed piece obtained by the above mentioned hot pressing was folded alternately five times in a mountain fold and five times in a valley fold, for a total of ten folds. When there were no breaks after a total of 10 mountain folds and valley folds, it was rated as "A". When breaks or cuts occurred between the 2nd and 10th folds in total, it was rated as "B". When breaks or cuts occurred after the first mountain fold, it was rated as "C". When it was rated as A or B, it was determined that the mechanical strength was high.

(7) Izod impact strength

A test piece of a polycarbonate resin sample having a thickness of 3.2 mm, a length of 53.5 mm, and a width of 12.7 mm was produced using a small injection molding machine (Shinko Sellbic Co., Ltd. C, Mobile) under the conditions of the cylinder temperature and the mold temperature described in each of Examples and Comparative Examples. A notch was cut on the test piece in accordance with ASTM D256 at a vertical position of 31.8 mm from the edge. The notch had a notch tip radius of 0.25 mm, and a notch depth of 2.54 mm. A value of the notched Izod of the test piece was measured each five times at room temperature (23°C) and low temperature (-20°C) using a universal impact tester (Toyo Seiki Seisaku-sho, Ltd.). Those that did not break after five tests were designated "NB".

(8) Recovery rate and tensile permanent set

Using the obtained polycarbonate resin, a strip-shaped test sample was prepared in the same manner as in the measurement of the tensile modulus and breaking elongation.

The obtained test sample was pulled using a tabletop precision universal testing machine "AUTOGRAPH AGS-X (manufactured by Shimadzu Corporation) " with an initial chuck distance (gauge distance) of 45 mm and a tensile speed of 50 mm/min, until it reached approximately 100% elongation, at which point it was stopped and held for 10 minutes. The gauge distance during the holding period was also measured. Then, the test sample was contracted to the initial gauge distance and removed, and the gauge distance of the test sample immediately after removal (within 30 seconds) and 30 minutes after removal were measured. Using these measured values, the stretched length (A), the restored length immediately after removal (B), and the restored length 30 minutes after removal (C) were calculated, and the recovery rate and tensile permanent set were determined. The formulas for calculating the recovery rate and tensile permanent set are as follows.

$$\text{Recovery rate: } \{(B)/(C)\} \times 100\ (\%)$$

$$\text{Tensile permanent set } (\%)\text{: } \{((A)-(C))/(A)\} \times 100\ (\%)$$

The higher the recovery rate and the smaller the tensile permanent set, the better the rubber elasticity, and therefore the more preferable.

[Raw materials]

The compounds used in the following Examples and Comparative Examples are abbreviated as follows. The compounds used were from the following manufacturers.

Plant-derived raw materials were used for PO3G and ISB described in the following compounds.

<Dihydroxy compounds>

PO3G500-1: Polytrimethylene ether glycol, number average molecular weight 562 (manufactured by ALLESSA, product name: VELVETOL)

PO3G500-2: Polytrimethylene ether glycol, number average molecular weight 514 (manufactured by ALLESSA, product name: VELVETOL)

PO3G1000-1: Polytrimethylene ether glycol, number average molecular weight 1042 (manufactured by ALLESSA, product name: VELVETOL)

PO3G1000-2: Polytrimethylene ether glycol, number average molecular weight 1069 (manufactured by ALLESSA, product name: VELVETOL)

PO3G 2700: Polytrimethylene ether glycol, number average molecular weight 2743 (manufactured by ALLESSA, product name: VELVETOL)

PTMG3000: Polytetramethylene ether glycol, number average molecular weight 2841 (manufactured by Mitsubishi Chemical Corporation)

PTMG4000: Polytetramethylene ether glycol, number average molecular weight 3860 (manufactured by Mitsubishi Chemical Corporation)

SPG: Spiroglycol (manufactured by Mitsubishi Gas Chemical Company, Inc.)

ISB: Isosorbide (manufactured by Roquette Freres)

CHDM: 1,4-Cyclohexanedimethanol (manufactured by SK Chemicals Co., Ltd.)

DHDE: 4,4'-Dihydroxydiphenyl ether (manufactured by Tokyo Chemical Industry Co., Ltd.)

BPF: Bis(4-hydroxyphenyl)methane (=bisphenol F) (manufactured by Tokyo Chemical Industry Co., Ltd.)

ThioDP: 4,4'-thiodiphenol (manufactured by Tokyo Chemical Industry Co., Ltd.)

BPA: 2,2-bis(4-hydroxyphenyl)propane (=bisphenol A) (manufactured by Mitsubishi Chemical Corporation)

<Carbonate ester>

DPC: Diphenyl carbonate (manufactured by Mitsubishi Chemical Corporation)

<Polymerization catalyst>

Calcium acetate monohydrate (manufactured by Fujifilm Wako Pure Chemical Corporation)
Cesium carbonate (manufactured by Kishida Chemical Co., Ltd.)

[Measurement of melting point peak temperature of dihydroxy compound (2)]

Using only the compounds shown in Table 1 as dihydroxy compounds, polycarbonate resins (corresponding to the polycarbonate resin (2)) containing 100 wt % of the carbonate structural units (Y) were produced by the polymerization method described below, and the melting point peak temperatures thereof were measured. The measurement method was the same as that described above, except that the temperature was lowered to 50°C instead of -120°C at a temperature drop rate any of 10 to 40°C/min. The results are shown in Table 1. When a polycarbonate resin (2) has a melting point peak temperature when measured at a temperature drop rate any of 10 to 40°C/min, the polycarbonate resin (2) is judged to have a melting point peak temperature (usually the slower the temperature drop rate, the easier it is to detect the melting point peak temperature).

Only for the polycarbonate resin containing 100 wt % of the carbonate structural unit (Y) using BPA, the resin was dissolved in methylene chloride and then dried, and the melting point peak temperature was measured. The results were shown in Table 1. For the resin that was dissolved and then dried, the melting point peak temperature during the first temperature rise was measured.

[Table 1]

<Table 1>

| Type of dihydroxy compound (2) | Melting point peak temperature (°C) |
|---|---|
| SPG | 252 |
| DHDE | 238 |
| BPF | 217, 230 |
| ThioDP | 218 |
| BPA | 242 |

Table 1 shows that all of the compounds used as the dihydroxy compound (2) in the Examples have a melting point peak temperature.

[Polymerization method]

The general polymerization method for the polycarbonate resin (2) obtained by polymerizing the dihydroxy compound (2) and a carbonate source by the transesterification method is as follows.

A raw material mixture was prepared by mixing a glass reactor having a capacity of approximately 570 mL equipped with a reactor stirrer, a reactor heater, and a reactor pressure regulator with the dihydroxy compound (2), DPC,

and an aqueous solution of cesium carbonate or calcium acetate monohydrate as a catalyst so that the amount was 0.5 to 100 μmol per 1 mol of the total dihydroxy compounds. The ratio of the amount of DPC to the dihydroxy compound (2) was set to any of 1.00 to 1.08.

Next, the glass reactor was then evacuated to a pressure of 1.3 to 4.0 kPa (10 to 30 Torr) and was then filled with nitrogen to atmospheric pressure. This operation was performed five times to purge the reactor with nitrogen. After the nitrogen purge, the external temperature (referred to as the first-stage polymerization temperature) of the reactor was increased to 220°C to gradually increase the internal temperature of the reactor and dissolve the mixture. The stirrer was then rotated at 100 rpm. The absolute pressure in the reactor was then reduced from 101.3 kPa (760 Torr) to 13.3 kPa (100 Torr) over 40 minutes while distilling off a by-product phenol of an oligomerization reaction between the dihydroxy compounds and DPC in the reactor.

Then a transesterification reaction was then performed for 80 minutes (when the dihydroxy compound (2) was SPG, the time was shortened to 45 minutes to prevent solidification due to crystallization during polymerization) while maintaining the pressure in the reactor at 13.3 kPa and further distilling off the phenol. The external temperature (hereinafter referred to as the second-stage polymerization temperature) of the reactor was then increased to any temperature between 230 and 290°C, and the absolute pressure in the reactor was reduced from 13.3 kPa (100 Torr) to 399 Pa (3 Torr) over 40 minutes to remove the distilled phenol from the system. Furthermore, the absolute pressure in the reactor was reduced to 60 Pa (approximately 0.4 Torr) to perform a polycondensation reaction. The polycondensation reaction was completed when the reactor stirrer had a predetermined stirring power. Since crystalline polycarbonate resin has poor solubility in solvents, it is difficult to measure the viscosity average molecular weight, and it is difficult to adjust the degree of polymerization at the end of the polymerization reaction, the degree of polymerization was adjusted with reference to the stirring power.

In measuring the melting point peak temperature of the polycarbonate resin (2), the specified stirring power varies depending on the volume of the polymerization tube and the weight of the charged raw materials, but it was set with reference to the stirring power at which the polycarbonate resin (2) has a viscosity average molecular weight of 21,000 when the dihydroxy compound (2) is BPA and the second-stage polymerization temperature is 290°C in a specific reaction apparatus and specific charged weight.

The reactor was then filled with nitrogen to an absolute pressure of 101.3 kPa and was pressured to a gauge pressure of 0.2 MPa. A strand of the polycarbonate resin was drawn out from the bottom of the reactor and was pelletized with a rotary cutter.

In the above polymerization method, the preparation method of the raw material compound and the second-stage polymerization temperature for each dihydroxy compound were as follows.

[SPG]

A raw material mixture was prepared by mixing 116.71 g (approximately 0.383 mol) of SPG, 83.37 g (approximately 0.389 mol) of DPC, and a 3.0% by mass aqueous solution of calcium acetate monohydrate as a catalyst so that the amount of calcium acetate monohydrate was 100 μmol per 1 mol of the total dihydroxy compounds. The second-stage polymerization temperature was 285°C, and the polymerization was carried out using the above mentioned polymerization method.

[DHDE]

A raw material mixture was prepared by mixing 116.71g (approximately 0.577mol) of DHDE, 123.64g (approximately 0.577mol) of DPC, and a 0.4% by mass aqueous solution of cesium carbonate as a catalyst so that the amount of cesium carbonate was 5μmol per 1mol of the total dihydroxy compounds. The second-stage polymerization temperature was 280°C, and the polymerization was carried out using the above mentioned polymerization method.

[BPF]

A raw material mixture was prepared by mixing 116.71g (approximately 0.5829mol) of BPF, 127.98g (approximately 0.5974mol) of DPC, and a 0.4% by mass aqueous solution of cesium carbonate as a catalyst so that the amount of cesium carbonate was 10μmol per 1mol of the total dihydroxy compounds. The second-stage polymerization temperature was 285°C, and the polymerization was carried out using the above mentioned polymerization method.

[ThioDP]

A raw material mixture was prepared by mixing 116.71g (approximately 0.5347mol) of ThioDP, 115.69g (approximately 0.5401mol) of DPC, and a 0.4% by mass aqueous solution of cesium carbonate as a catalyst so that

the amount of cesium carbonate was 10μmol per 1mol of the total dihydroxy compounds. The second-stage polymerization temperature was 285°C, and the polymerization was carried out using the above mentioned polymerization method.

[BPA]

A raw material mixture was prepared by mixing 116.71g (approximately 0.511mol) of BPA, 117.18g (approximately 0.547mol) of DPC, and a 0.04% by mass aqueous solution of cesium carbonate as a catalyst so that the amount of cesium carbonate was 0.5μmol per 1mol of the total dihydroxy compounds. The second-stage polymerization temperature was 290°C, and the polymerization was carried out using the above mentioned polymerization method.

[Example 1]

A raw material mixture was prepared by charging a glass reactor having a capacity of approximately 570 mL equipped with a reactor stirrer, a reactor heater, and a reactor pressure regulator with 58.36 g (approximately 0.0213 mol) of PO3G2700, 58.36 g (approximately 0.192 mol) of SPG, 46.77 g (approximately 0.218 mol) of DPC, and a 3.0 wt% aqueous solution of calcium acetate monohydrate as a catalyst so that the amount of calcium acetate monohydrate was 300 μmol per 1 mole of the total dihydroxy compounds.

The glass reactor was then evacuated to a pressure of 1.3 to 4.0 kPa (10 to 30 Torr) and was then filled with nitrogen to atmospheric pressure. This operation was performed five times to purge the reactor with nitrogen. After the nitrogen purge, the external temperature of the reactor was increased to 240°C to gradually increase the internal temperature of the reactor and dissolve the mixture. The stirrer was then rotated at 100 rpm. The absolute pressure in the reactor was then reduced from 101.3 kPa (760 Torr) to 35.3 kPa (265 Torr) over 30 minutes. The pressure was held at 35.3 kPa (265 Torr) for 15 minutes, and then reduced to 13.3 kPa (100 Torr) over 10 minutes. The operation of maintaining the pressure at 35.3 kPa and then reducing the pressure to 13.3 kPa was carried out while distilling off a by-product phenol of an oligomerization reaction between the dihydroxy compounds and DPC in the reactor.

A transesterification reaction was then performed for 80 minutes while maintaining the pressure in the reactor at 13.3 kPa and further distilling off the phenol. The external temperature of the reactor was then increased to 260°C, and the absolute pressure in the reactor was reduced from 13.3 kPa (100 Torr) to 399 Pa (3 Torr) over 40 minutes to remove the distilled phenol from the system. Furthermore, the absolute pressure in the reactor was reduced to 60 Pa (approximately 0.4 Torr) to perform a polycondensation reaction. The polycondensation reaction was completed when the reactor stirrer had a predetermined stirring power.

Then, the polycarbonate resin was extracted from the reactor together with the agitating blade, and the polycarbonate resin was obtained.

This polycarbonate resin contained 48.2 wt% of the carbonate structural unit (X) and 51.8 wt% of the carbonate structural unit (Y), and had a biomass degree of 47.7 wt%.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece. The results are shown in Table 2A.

[Example 2]

A raw material mixture was prepared by charging a glass reactor having a capacity of approximately 570 mL equipped with a reactor stirrer, a reactor heater, and a reactor pressure regulator with 70.03 g (approximately 0.0255 mol) of PO3G2700, 46.68 g (approximately 0.153 mol) of SPG, 40.05 g (approximately 0.187 mol) of DPC, and a 3.0 wt% aqueous solution of calcium acetate monohydrate as a catalyst so that the amount of calcium acetate monohydrate was 100 μmol per 1 mole of the total dihydroxy compounds.

The glass reactor was then evacuated to a pressure of 1.3 to 4.0 kPa (10 to 30 Torr) and was then filled with nitrogen to atmospheric pressure. This operation was performed five times to purge the reactor with nitrogen. After the nitrogen purge, the external temperature of the reactor was increased to 220°C to gradually increase the internal temperature of the reactor and dissolve the mixture. The stirrer was then rotated at 100 rpm. After stirring for 60 minutes, the temperature was increased to 240°C, and the absolute pressure in the reactor was then reduced from 101.3 kPa (760 Torr) to 13.3 kPa (100 Torr) over 40 minutes while distilling off a by-product phenol of an oligomerization reaction between the dihydroxy compounds and DPC in the reactor.

A transesterification reaction was then performed for 80 minutes while maintaining the pressure in the reactor at 13.3 kPa and further distilling off the phenol. The external temperature of the reactor was then increased to 250°C, and the absolute pressure in the reactor was reduced from 13.3 kPa (100 Torr) to 399 Pa (3 Torr) over 40 minutes to remove the

distilled phenol from the system. Furthermore, the absolute pressure in the reactor was reduced to 40 Pa (approximately 0.3 Torr) to perform a polycondensation reaction. The polycondensation reaction was completed when the reactor stirrer had a predetermined stirring power.

The reactor was then filled with nitrogen to an absolute pressure of 101.3 kPa and was pressured to a gauge pressure of 0.2 MPa. A strand of the polycarbonate resin was drawn out from the bottom of the reactor and was pelletized with a rotary cutter.

This polycarbonate resin contained 58.2 wt% of the carbonate structural unit (X) and 41.8 wt% of the carbonate structural unit (Y), and had a biomass degree of 57.7 wt%.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece.

Furthermore, using a small injection molding machine (Shinko Selvic Co., Ltd. C, Mobile), a sample having a thickness of 3.2 mm, a length of 53.5 mm and a width of 12.7 mm was molded under conditions of a cylinder temperature of 250°C and a mold temperature of 40°C, and a notched Izod impact test was performed.

A tensile test was also performed to determine the recovery rate and tensile permanent set.

The results are shown in Tables 2A, 3 and 4.

[Example 3]

A raw material mixture was prepared by mixing 81.70 g (approximately 0.0298 mol) of PO3G2700, 35.01 g (approximately 0.115 mol) of SPG, 32.42 g (approximately 0.151 mol) of DPC, and a 3.0 wt% aqueous solution of calcium acetate monohydrate as a catalyst so that the amount of calcium acetate monohydrate was 75 μmol per 1 mol of the total dihydroxy compounds. The procedure was carried out in the same manner as in Example 2, except that the external temperature of the reactor was not raised to 250°C when reducing the pressure from 13.3 kPa (100 Torr) but was kept at 240°C.

The obtained polycarbonate resin contained 68.5 wt% of the carbonate structural unit (X) and 31.5 wt% of the carbonate structural unit (Y), and had a biomass degree of 67.8 wt%.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece.

Furthermore, using a small injection molding machine (Shinko Selvic Co., Ltd. C, Mobile), a sample having a thickness of 3.2 mm, a length of 53.5 mm and a width of 12.7 mm was molded under conditions of a cylinder temperature of 240°C and a mold temperature of 40°C, and a notched Izod impact test was performed.

A tensile test was also performed to determine the recovery rate and tensile permanent set.

The results are shown in Tables 2A, 3 and 4.

[Example 4]

A raw material mixture was prepared by mixing 58.36 g (approximately 0.0584 mol) of PO3G1000-1, 58.36 g (approximately 0.192 mol) of SPG, 55.72 g (approximately 0.260 mol) of DPC, and a 3.0 wt% aqueous solution of calcium acetate monohydrate as a catalyst so that the amount of calcium acetate monohydrate was 250 μmol per 1 mol of the total dihydroxy compounds. The procedure was carried out in the same manner as in Example 2, except that the external temperature of the reactor was raised to 260°C when reducing the pressure from 13.3 kPa (100 Torr).

The obtained polycarbonate resin contained 48.6 wt% of the carbonate structural unit (X) and 51.4 wt% of the carbonate structural unit (Y), and had a biomass degree of 47.3 wt%.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece.

Furthermore, using a small injection molding machine (Shinko Selvic Co., Ltd. C, Mobile), a sample having a thickness of 3.2 mm, a length of 53.5 mm and a width of 12.7 mm was molded under conditions of a cylinder temperature of 250°C and a mold temperature of 40°C, and a notched Izod impact test was performed.

A tensile test was also performed to determine the recovery rate and tensile permanent set.

The results are shown in Tables 2A, 3 and 4.

[Example 5]

A raw material mixture was prepared by mixing 35.01 g (approximately 0.0623 mol) of PO3G500-1, 81.70 g (approximately 0.268 mol) of SPG, 74.03 g (approximately 0.346 mol) of DPC, and a 3.0 wt% aqueous solution of calcium acetate monohydrate as a catalyst so that the amount of calcium acetate monohydrate was 175 μmol per 1 mol of the total dihydroxy compounds. The procedure was carried out in the same manner as in Example 2, except that the external temperature of the reactor was raised to 260°C when reducing the pressure from 13.3 kPa (100 Torr).

The obtained polycarbonate resin contained 29.2 wt% of the carbonate structural unit (X) and 70.8 wt% of the carbonate structural unit (Y), and had a biomass degree of 27.8 wt%.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece. The results are shown in Table 2A.

[Example 6]

A raw material mixture was prepared by mixing 58.36 g (approximately 0.104 mol) of PO3G500-1, 58.36 g (approximately 0.192 mol) of SPG, 67.12 g (approximately 0.313 mol) of DPC, and a 3.0 wt% aqueous solution of calcium acetate monohydrate as a catalyst so that the amount of calcium acetate monohydrate was 125 μmol per 1 mol of the total dihydroxy compounds. The procedure was carried out in the same manner as in Example 2, except that the external temperature of the reactor was not raised to 250°C when reducing the pressure from 13.3 kPa (100 Torr) but was kept at 240°C. The resulting strands of the polycarbonate resin were too thin to use a rotary cutter, so they were cut into pellets with scissors.

The obtained polycarbonate resin contained 49.1 wt% of the carbonate structural unit (X) and 50.9 wt% of the carbonate structural unit (Y), and had a biomass degree of 46.7 wt%.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece.

A tensile test was also performed to determine the recovery rate and tensile permanent set.

The results are shown in Tables 2A and 4.

[Comparative Example 1]

A raw material mixture was prepared by charging a glass reactor having a capacity of approximately 570 mL equipped with a reactor stirrer, a reactor heater, and a reactor pressure regulator with 59.63 g (approximately 0.408 mol) of ISB, 25.22 g (approximately 0.175 mol) of CHDM, 123.62 g (approximately 0.577 mol) of DPC, and a 0.2 wt% aqueous solution of calcium acetate monohydrate as a catalyst so that the amount of calcium acetate monohydrate was 3 μmol per 1 mole of the total dihydroxy compounds.

The glass reactor was then evacuated to a pressure of 1.3 to 4.0 kPa (10 to 30 Torr) and was then filled with nitrogen to atmospheric pressure. This operation was performed five times to purge the reactor with nitrogen. After the nitrogen purge, the external temperature of the reactor was increased to 210°C to gradually increase the internal temperature of the reactor and dissolve the mixture. The stirrer was then rotated at 100 rpm. After stirring for 30 minutes, and the absolute pressure in the reactor was then reduced from 101.3 kPa (760 Torr) to 13.3 kPa (100 Torr) over 90 minutes while distilling off a by-product phenol of an oligomerization reaction between the dihydroxy compounds and DPC in the reactor.

A transesterification reaction was then performed for 45 minutes while maintaining the pressure in the reactor at 13.3 kPa and further distilling off the phenol. The external temperature of the reactor was then increased to 230°C, and the absolute pressure in the reactor was reduced from 13.3 kPa (100 Torr) to 133 Pa (1 Torr) over 20 minutes to remove the distilled phenol from the system. Furthermore, the absolute pressure in the reactor was reduced to 50 Pa (approximately 0.4 Torr) to perform a polycondensation reaction. The polycondensation reaction was completed when the reactor stirrer had a predetermined stirring power.

The reactor was then filled with nitrogen to an absolute pressure of 101.3 kPa and was pressured to a gauge pressure of 0.2 MPa. A strand of the polycarbonate resin was drawn out from the bottom of the reactor and was pelletized

with a rotary cutter.

The content of each carbonate structural unit and biomass degree in the obtained polycarbonate resin are shown in Table 2B.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. The results are shown in Table 2B.

[Comparative Example 2]

A raw material mixture was prepared by mixing 25.67 g (approximately 0.176 mol) of ISB, 59.11 g (approximately 0.410 mol) of CHDM, 124.80 g (approximately 0.583 mol) of DPC, and a 0.2 wt% aqueous solution of calcium acetate monohydrate as a catalyst so that the amount of calcium acetate monohydrate was 5 μmol per 1 mol of the total dihydroxy compounds. The procedure was carried out in the same manner as in Comparative Example 1, except that the external temperature of the reactor was raised to 220°C when reducing the pressure from 13.3 kPa (100 Torr).

The content of each carbonate structural unit and a biomass degree of the obtained polycarbonate resin are shown in Table 2B.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece. The results are shown in Table 2B.

[Comparative Example 3]

A raw material mixture was prepared by mixing 70.03 g (approximately 0.0255 mol) of PO3G2700, 46.68 g (approximately 0.319 mol) of ISB, 75.74 g (approximately 0.354 mol) of DPC, and a 3.0 wt% aqueous solution of calcium acetate monohydrate as a catalyst so that the amount of calcium acetate monohydrate was 50 μmol per 1 mol of the total dihydroxy compounds. The procedure was carried out in the same manner as in Example 2, except that the external temperature of the reactor was not raised to 250°C when reducing the pressure from 13.3 kPa (100 Torr) but was kept at 240°C.

The content of each carbonate structural unit and a biomass degree of the obtained polycarbonate resin are shown in Table 3B.

The polycarbonate resin thus obtained was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, but the sample was too soft to measure. A bending test was also performed on the hot pressed test piece. The results are shown in Table 2B.

It should be noted that there are two glass transition temperatures (Tg), and the lower temperature side is thought to be the glass transition temperature derived from the carbonate structural unit consisting of PO3G, while the higher temperature side is thought to be the glass transition temperature derived from the carbonate structural unit consisting of ISB.

[Comparative Example 4]

A raw material mixture was prepared by mixing 55.84g (approximately 0.109mol) of PO3G500-2, 60.87g (approximately 0.417mol) of ISB, 113.62g (approximately 0.530mol) of DPC, and a 3.0wt% aqueous solution of calcium acetate monohydrate as a catalyst so that the amount of calcium acetate monohydrate was 140 μmol per 1 mol of the total dihydroxy compounds. The procedure was carried out in the same manner as in Comparative Example 1, except that the external temperature of the reactor was raised to 220°C.

The content of each carbonate structural unit and a biomass degree of the obtained polycarbonate resin are shown in Table 3B.

The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece.

A tensile test was also performed to determine the recovery rate and tensile permanent set.
The results are shown in Tables 2A and 4.

[Comparative Example 5]

The same procedure as in Comparative Example 1 was carried out except that a raw material mixture was prepared by mixing 76.11 g (about 0.073 mol) of PO3G1000-1, 44.15 g (about 0.302 mol) of ISB, 80.29 g (about 0.375 mol) of DPC, and a 3.0 wt% aqueous solution of calcium acetate monohydrate as a catalyst so that the amount of calcium acetate monohydrate was 40 μmol per 1 mol of the total dihydroxy compounds.
The content of each carbonate structural unit and a biomass degree of the obtained polycarbonate resin are as shown in Table 2B.
The polycarbonate resin obtained in this manner was subjected to measurements of the number average molecular weight (Mn), weight average molecular weight (Mw), Mw/Mn, glass transition temperature (Tg), and melting point peak temperature (Tm), and was also subjected to a heating test at 120°C. A tensile test was also performed using a test piece obtained by hot pressing this polycarbonate resin, and the tensile modulus and breaking elongation were measured. A bending test was also performed on the hot pressed test piece.
A tensile test was also performed to determine the recovery speed and tensile permanent set.
The results are shown in Tables 2A and 4.

[Comparative Example 6]

A raw material mixture was prepared by mixing 70.03 g (approximately 0.0233 mol) of PTMG3000, 46.68 g (approximately 0.153 mol) of SPG, 40.05 g (approximately 0.187 mol) of DPC, and a 0.4 wt% aqueous solution of cesium carbonate as a catalyst so that the amount of cesium carbonate was 30 μmol per 1 mol of the total dihydroxy compounds. The procedure was carried out in the same manner as in Example 2, except that the external temperature of the reactor was raised to 260°C when reducing the pressure from 13.3 kPa (100 Torr). However, crystallization occurred during the polymerization, and the stirring power did not increase, so the reaction was stopped.
The polycarbonate resin was then removed from the reactor together with the stirring blades to obtain a polycarbonate resin. Since the polymerization reaction did not proceed sufficiently, the resin was very brittle.
This polycarbonate resin contained 58.2 wt% of the carbonate structural unit (X) and 41.8 wt% of the carbonate structural unit (Y), and had a biomass content of 0 wt%.
An attempt was made to dissolve the polycarbonate resin thus obtained in chloroform, but the sample did not dissolve, making GPC measurement impossible. In addition, this polycarbonate resin was subjected to measurements of glass transition temperature (Tg), and melting point peak temperature (Tm), and was also subjected to a heating test at 120°C. Since the melting point peak temperature of this polycarbonate resin was too high and polymerization did not proceed sufficiently, the fluidity was too high when melted in a heat press, making it impossible to mold the sample.
The results are shown in Table 2B.
It should be noted that there are two melting point peak temperatures (Tm), and the lower temperature side is thought to be the melting point peak temperature derived from the carbonate structural unit consisting of PTMG, while the higher temperature side is thought to be the melting point peak temperature derived from the carbonate structural unit consisting of SPG.

[Table 2A]

<Table 2A>

| | | | Example | | | | | |
|---|---|---|---|---|---|---|---|---|
| | | | 1 | 2 | 3 | 4 | 5 | 6 |
| Ratio of carbonate structural unit (wt%) | Carbonate structural unit (X) | PO3G500-1 | | | | | 29.2 | 49.1 |
| | | PO3G1000-1 | | | | 48.6 | | |
| | | PO3G2700 | 48.2 | 58.2 | 68.5 | | | |
| | Carbonate structural unit (Y) | SPG | 51.8 | 41.8 | 31.5 | 51.4 | 70.8 | 50.9 |
| | Other carbonate structural units | PTMG3000 | | | | | | |
| | | ISB | | | | | | |
| | | CHDM | | | | | | |
| Flowability | GPC | Number average molecular weight (Mn) | 17,356 | 48,485 | 64,426 | 57,996 | 53,299 | 30,144 |
| | | Weight average molecular weight (Mw) | 43,760 | 145,470 | 170,311 | 143,813 | 137,918 | 89,874 |
| | | Mw/Mn | 2.52 | 3.00 | 2.64 | 2.48 | 2.59 | 2.98 |
| Low-temperature properties | Glass transition temperature (Tg)[°C] | | -71 | -70 | -69 | -48 | 17 | -34 |
| Heat resistance | Melting point peak temperature (Tm)[°C] | | 235,278 | 219 | 196 | 209 | 223 | 188 |
| | 120°C·2h heating test | | ○ | ○ | ○ | ○ | ○ | ○ |
| Flexibility | Tensile test | Tensile modulus [MPa] | 227 | 51 | 21 | 84 | 192 | 95 |
| Mechanical strength | | Breaking elongation [%] | 5 | 545 | 542 | 514 | 83 | 513 |
| | Test piece bending test | | B | A | A | A | A | A |
| Biomass degree [wt%] | | | 47.7 | 57.7 | 67.8 | 47.3 | 27.8 | 46.7 |

[Table 2B]

<Table 2B>

| | | | Comparative Example | | | | | |
|---|---|---|---|---|---|---|---|---|
| | | | 1 | 2 | 3 | 4 | 5 | 6 |
| Ratio of carbonate structural unit (wt%) | Carbonate structural unit (X) | PO3G500-1 | | | | 45.0 | | |
| | | PO3G1000-1 | | | | | 60.0 | |
| | | PO3G2700 | | | 56.3 | | | |
| | Carbonate structural unit (Y) | SPG | | | | | | 41.8 |
| | Other carbonate structural units | PTMG3000 | | | | | | 58.2 |
| | | ISB | 70.2 | 30.2 | 43.7 | 55.0 | 40.0 | |
| | | CHDM | 29.8 | 69.8 | | | | |
| Flowability | GPC | Number average molecular weight (Mn) | 17,918 | 19,129 | 34,389 | 55,662 | 45,376 | - |
| | | Weight average molecular weight (Mw) | 38,818 | 41,202 | 89,139 | 117,944 | 91,911 | - |
| | | Mw/Mn | 2.17 | 2.15 | 2.59 | 2.12 | 2.03 | - |
| Low-temperature properties | Glass transition temperature (Tg)[°C] | | 120 | 68 | -70,146 | -59 | Unclear | n.d. |
| Heat resistance | Melting point peak temperature (Tm)[°C] | | n.d. | n.d. | n.d. | n.d. | n.d. | 21,281 |
| | 120°C·2h heating test | | O | × | × | × | × | ○ |
| Flexibility | Tensile test | Tensile modulus [MPa] | 2413 | 1584 | Measurement impossible | 86 | 1 | Heat-press molding impossible |
| Mechanical strength | | Breaking elongation [%] | 9 | 5 | | 462 | 420 | |
| | Test piece bending test | | B | A | A | A | A | |
| Biomass degree [wt%] | | | 58.8 | 25.3 | 92.3 | 88.7 | 91.9 | 0 |

[Table 3]

<Table 3>

| | | Example | | |
|---|---|---|---|---|
| | | 2 | 3 | 4 |
| Carbonate structural unit (X) [wt%] | PO3G500-1 | | | |
| | PO3G1000-1 | | | 48.6 |
| | PO3G2700 | 58.2 | 68.5 | |
| Carbonate structural unit (Y)[wt%] | SPG | 41.8 | 31.5 | 51.4 |

(continued)

| | | | Example | | |
|---|---|---|---|---|---|
| | | | 2 | 3 | 4 |
| Notched Izod impact strength [J/m]※ | Mechanical strength | 23°C | NB | NB | NB |
| | Low-temperature mechanical strength | -20°C | NB | NB | NB |
| ※NB designates "not breake". | | | | | |

[Table 4]

<Table 4>

| | | Example | | | | Comparative Example | |
|---|---|---|---|---|---|---|---|
| | | 2 | 3 | 4 | 6 | 4 | 5 |
| Carbonate structural unit (X) [wt%] | PO3G500-1 | | | | 49.1 | | |
| | PO3G500-2 | | | | | 45.0 | |
| | PO3G1000-1 | | | 48.6 | | | 60.0 |
| | PO3G2700 | 58.2 | 68.5 | | | | |
| Carbonate structural unit (Y) [wt%] | SPG | 41.8 | 31.5 | 51.4 | 50.9 | | |
| Other structural unit[wt%] | ISB | | | | | 55.0 | 40.0 |
| Stretched length (A)(mm) | | 42.5 | 43.0 | 41.5 | 43.5 | 39.5 | 42.0 |
| Restored length immediately after removal (within 30 seconds) (B)(mm) | | 33.8 | 38.0 | 29.0 | 26.5 | 19.8 | 17.5 |
| Restored length 30 minutes after removal (C)(mm) | | 35.8 | 39.5 | 31.0 | 28.3 | 32.3 | 34.0 |
| Recovery rate(%) | | 94 | 96 | 94 | 94 | 61 | 52 |
| Tensile permanent set(%) | | 16 | 8 | 25 | 35 | 18 | 19 |

[Consideration of Examples 1 to 6 and Comparative Examples 1 to 6]

The following can be seen from the results of Examples 1 to 6 and Comparative Examples 1 to 6.

Table 2A shows that the polycarbonate resins of Examples 1 to 6, which have PO3G (the carbonate structural unit (X)) and SPG (the carbonate structural unit (Y)) and have a melting point peak temperature, have good results in heat resistance, flexibility, and mechanical strength. Table 3 also shows that the resins did not break in the notched Izod measurement under both conditions of 23°C and -20°C, and therefore have good mechanical strength and low-temperature mechanical strength. It is believed that the development of low-temperature mechanical strength is due to the low glass transition temperature (Tg).

Furthermore, from Table 4, it can be seen that the polycarbonate resin of the present invention has a high recovery rate and a small tensile permanent set. In particular, the recovery rate is much higher than that of the polycarbonate resins of the Comparative Examples, and it is clear that the rubber elasticity is excellent.

On the other hand, as shown in Table 2B, Comparative Examples 1 to 5 do not have a melting point peak temperature, and are inferior in either heat resistance, flexibility, mechanical strength, or low-temperature mechanical strength. Comparative Examples 1 and 2 change the copolymerization ratio of ISB and CHDM. Increasing the copolymerization ratio of CHDM increases flexibility, but decreases the glass transition temperature (Tg), and decreases heat resistance. In Comparative Example 1, the results of the heating test show that the heat resistance is high, but the tensile

modulus is high and flexibility is low. In Comparative Example 2, the tensile modulus is lower than Comparative Example 1, and flexibility is increased, but the results of the heating test show that heat resistance is low.

Comparative Examples 3 to 5 do not contain the carbonate structural unit (Y), and therefore, although the results of the tensile modulus indicate flexibility, the results of the heating test indicate low heat resistance, and thus the coexistence of heat resistance and flexibility is not achieved.

Comparative Example 6 does not contain the carbonate structural unit (X), and it is believed that when PTMG3000 is used, the melting point peak temperature is too high, causing crystallization during polymerization, preventing the polymerization reaction from proceeding smoothly and resulting in a very brittle resin. It was not possible to obtain a test sample by hot pressing, but it is believed to be too brittle and therefore low in flexibility.

[Example 7]

A raw material mixture was prepared by charging a glass reactor having a capacity of approximately 570 mL equipped with a reactor stirrer, a reactor heater, and a reactor pressure regulator with 30.00g (approximately 0.0111 mol) of PO3G2700, 70.00g (approximately 0.346 mol) of DHDE, 77.69g (approximately 0.363 mol) of DPC, and a 0.4 wt% aqueous solution of cesium carbonate as a catalyst so that the amount of cesium carbonate was 5 μmol per 1 mole of the total dihydroxy compounds.

The glass reactor was then evacuated to a pressure of 1.3 to 4.0 kPa (10 to 30 Torr) and was then filled with nitrogen to atmospheric pressure. This operation was performed five times to purge the reactor with nitrogen. After the nitrogen purge, the external temperature of the reactor was increased to 220°C to gradually increase the internal temperature of the reactor and dissolve the mixture. The stirrer was then rotated at 100 rpm. After stirring, absolute pressure in the reactor was then reduced from 101.3 kPa (760 Torr) to 13.3 kPa (100 Torr) over 40 minutes while distilling off a by-product phenol of an oligomerization reaction between the dihydroxy compounds and DPC in the reactor.

A transesterification reaction was then performed for 80 minutes while maintaining the pressure in the reactor at 13.3 kPa and further distilling off the phenol. The external temperature of the reactor was then increased to 240°C, and the absolute pressure in the reactor was reduced from 13.3 kPa (100 Torr) to 399 Pa (3 Torr) over 40 minutes to remove the distilled phenol from the system. Furthermore, the external temperature of the reactor was raised to 260°C, and the absolute pressure in the reactor was reduced to 60 Pa (approximately 0.4 Torr) to perform a polycondensation reaction. The polycondensation reaction was completed when the reactor stirrer had a predetermined stirring power.

The reactor was then filled with nitrogen to an absolute pressure of 101.3 kPa and was pressured to a gauge pressure of 0.2 MPa. A strand of the polycarbonate resin was drawn out from the bottom of the reactor and was cut into pellets with scissors.

This polycarbonate resin contained 27.7 wt% of the carbonate structural unit (X) and 72.3 wt% of the carbonate structural unit (Y), and had a biomass content of 27.4 wt%.

The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.

The results are shown in Table 5A.

[Example 8]

A raw material mixture was prepared by mixing 58.36 g (approximately 0.0213 mol) of PO3G2700, 58.36 g (approximately 0.289 mol) of DHDE, 68.04 g (approximately 0.318 mol) of DPC, and a 0.4 wt% aqueous solution of cesium carbonate as a catalyst so that the amount of cesium carbonate was 5 μmol per 1 mol of the total dihydroxy compounds, and the procedure was carried out in the same manner as in Example 7.

The obtained polycarbonate resin contained 47.2 wt% of the carbonate structural unit (X) and 52.8 wt% of the carbonate structural unit (Y), and had a biomass degree of 46.7 wt%.

The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.

The results are shown in Table 5A.

[Example 9]

A raw material mixture was prepared by mixing 70.03g (approximately 0.0255mol) of PO3G2700, 46.68g (approximately 0.231mol) of DHDE, 56.57g (approximately 0.264mol) of DPC, and a 0.4wt% aqueous solution of cesium

carbonate as a catalyst so that the amount of cesium carbonate was 5μmol per 1mol of the total dihydroxy compounds, and the procedure was carried out in the same manner as in Example 7.

The obtained polycarbonate resin contained 57.3wt% of the carbonate structural unit (X) and 42.7wt% of the carbonate structural unit (Y), and had a biomass degree of 56.7wt%.

The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.

The results are shown in Table 5A.

[Example 10]

A raw material mixture was prepared by mixing 70.00g (approximately 0.0259mol) of PO3G2700, 30.00g (approximately 0.148mol) of DHDE, 38.64g (approximately 0.180mol) of DPC, and a 0.4wt% aqueous solution of cesium carbonate as a catalyst so that the amount of cesium carbonate was 5μmol per 1mol of the total dihydroxy compounds, and the procedure was carried out in the same manner as in in Example 7.

The obtained polycarbonate resin contained 67.6wt% of the carbonate structural unit (X) and 32.4wt% of the carbonate structural unit (Y), and had a biomass degree of 66.9wt%.

The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.

The results are shown in Table 5A.

[Example 11]

A raw material mixture was prepared by mixing 35.01 g (approximately 0.0350 mol) of PO3G1000-2, 81.70 g (approximately 0.404 mol) of DHDE, 94.99 g (approximately 0.443 mol) of DPC, and a 0.4 wt% aqueous solution of cesium carbonate as a catalyst so that the amount of cesium carbonate was 5 μmol per 1 mol of the total dihydroxy compounds, and the procedure was carried out in the same manner as in Example 7.

The obtained polycarbonate resin contained 28.0 wt% of the carbonate structural unit (X) and 72.0 wt% of the carbonate structural unit (Y), and had a biomass degree of 27.3 wt%.

The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.

The results are shown in Table 5A.

[Example 12]

A raw material mixture was prepared by mixing 58.36 g (approximately 0.0584 mol) of PO3G1000-2, 58.36 g (approximately 0.289 mol) of DHDE, 75.44 g (approximately 0.352 mol) of DPC, and a 0.4 wt% aqueous solution of cesium carbonate as a catalyst so that the amount of cesium carbonate was 5 μmol per 1 mol of the total dihydroxy compounds, and the procedure was carried out in the same manner as in Example 7.

The obtained polycarbonate resin contained 47.6 wt% of the carbonate structural unit (X) and 52.4 wt% of the carbonate structural unit (Y), and had a biomass degree of 46.4 wt%.

The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.

The results are shown in Table 5A.

[Example 13]

A raw material mixture was prepared by mixing 10.00g (approximately 0.00365mol) of PO3G2700, 10.00g (approximately 0.0499mol) of BPF, 12.05g (approximately 0.0563mol) of DPC, and a 0.4wt% aqueous solution of cesium carbonate as a catalyst so that the amount of cesium carbonate was 5μmol per 1mol of total dihydroxy compounds, and the procedure was carried out in the same manner as in Example 7 was used.

The obtained polycarbonate resin contained 47.2wt% of the carbonate structural unit (X) and 52.8wt% of the carbonate structural unit (Y), and had a biomass ratio of 46.7wt%.
The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.
The results are shown in Table 5A.

[Example 14]

A raw material mixture was prepared by mixing 58.36 g (approximately 0.0213 mol) of PO3G2700, 58.36 g (approximately 0.267 mol), of ThioDP, 64.93 g (approximately 0.303 mol) of DPC, and a 0.4 wt% aqueous solution of cesium carbonate as a catalyst so that the amount of cesium carbonate was 50 μmol per 1 mol of total dihydroxy compounds, and the procedure was carried out in the same manner as in Example 7 except that the reaction was carried out at 240°C instead of raising the external temperature of the reactor to 260°C.
The obtained polycarbonate resin contained 47.4 wt% of the carbonate structural unit (X) and 52.6 wt% of the carbonate structural unit (Y), and had a biomass degree of 46.9 wt%.
The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.
The results are shown in Table 5A.

[Example 15]

A raw material mixture was prepared by mixing 58.36 g (approximately 0.0213 mol) of PO3G2700, 58.36 g (approximately 0.256 mol) of BPA, 62.29 g (approximately 0.291 mol) of DPC, and a 0.4 wt% aqueous solution of cesium carbonate as a catalyst so that the amount of cesium carbonate was 5 μmol per 1 mol of the total dihydroxy compounds, and the procedure was carried out in the same manner as in Example 7 was used.
The obtained polycarbonate resin contained 47.5 wt% of the carbonate structural unit (X) and 52.5 wt% of the carbonate structural unit (Y), and had a biomass degree of 47.1 wt%.
The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.
The results are shown in Table 5A.

[Comparative Example 7]

A raw material mixture was prepared by mixing 116.71 g (approximately 0.511 mol) of BPA, 117.18 g (approximately 0.547 mol) of DPC, and a 0.04 wt% aqueous solution of cesium carbonate as a catalyst so that the amount of cesium carbonate was 0.5 μmol per 1 mol of total dihydroxy compounds, and the procedure was carried out in the same manner as in Example 7 except that the external temperature of the reactor was changed from 240°C to 290°C after heating from 220°C and the reaction was continued at 290°C until the end of the polymerization.
The obtained polycarbonate resin was composed of 100 wt% of the carbonate structural unit (Y), and had a biomass degree of 0 wt%.
The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.
The results are shown in Table 5B.

[Comparative Example 8]

A raw material mixture was prepared by mixing 58.36 g (approximately 0.0151 mol) of PTMG4000, 58.36 g (approximately 0.289 mol) of DHDE, 66.69 g (approximately 0.311 mol) of DPC, and a 0.4 wt% aqueous solution of cesium carbonate as a catalyst so that the amount of cesium carbonate was 5 μmol per 1 mol of the total dihydroxy compounds, and the procedure was carried out in the same manner as in Example 7.

The obtained polycarbonate resin contained 47.1 wt% of the other carbonate structural unit (X) and 52.9 wt% of the carbonate structural unit (Y), and had a biomass degree of 0 wt%.

The polycarbonate resin thus obtained was subjected to measurements of the Q value, glass transition temperature (Tg), and melting point peak temperature (Tm), and further subjected to a heating test at 120°C. A tensile test was also performed using a test piece obtained by hot pressing this polycarbonate resin, and the tensile modulus was measured. A bending test was also performed on the hot pressed test piece.

The results are shown in Table 5B.

[Comparative Example 9]

A raw material mixture was prepared by mixing 99.20 g (approximately 0.176 mol) of PO3G500-1, 17.51 g (approximately 0.0767 mol) of BPA, 58.04 g (approximately 0.271 mol) of DPC, and a 0.4 wt% aqueous solution of cesium carbonate as a catalyst so that the amount of cesium carbonate was 4.9 μmol per 1 mol of the total dihydroxy compounds, and the procedure was carried out in the same manner as in Example 7.

The polycarbonate resin obtained contained 84.2 wt% of the carbonate structural unit (X) and 15.8 wt% of the carbonate structural unit (Y), and had a biomass ratio of 80.2 wt%.

The polycarbonate resin thus obtained was subjected to measurements of the Q value, glass transition temperature (Tg), and melting point peak temperature (Tm), and further subjected to a heating test at 120°C. This polycarbonate resin did not solidify at room temperature, so it cannot be subjected to heat pressing, and therefore tensile tests and bending tests could not be conducted.

The results are shown in Table 5B.

[Table 5A]

<Table 5A>

| | | | Example | | | | | | | | |
|---|---|---|---|---|---|---|---|---|---|---|---|
| | | | 7 | 8 | 9 | 10 | 11 | 12 | 13 | 14 | 15 |
| Ratio of carbonate structural unit (wt%) | Carbonate structural unit (X) | PO3G500-1 | | | | | | | | | |
| | | PO3G1000-2 | | | | | 28.0 | 47.6 | | | |
| | | PO3G2700 | 27.7 | 47.2 | 57.3 | 67.6 | | | 47.2 | 47.4 | 47.5 |
| | Other carbonate structural unit | PTMG4000 | | | | | | | | | |
| | Carbonate structural unit (Y) | DHDE | 72.3 | 52.8 | 42.7 | 32.4 | 72.0 | 52.4 | | | |
| | | BPF | | | | | | | 52.8 | | |
| | | ThioDP | | | | | | | | 52.6 | |
| | | BPA | | | | | | | | | 52.5 |
| Flowability | Q value [$\times 10^{-2} cm^3/sec$] | 240°C | 103 | 142 | 141 | 176 | 136 | 158 | 87 | 169 | 86 |
| | | 220°C | - | - | 115 | 159 | - | 138 | 59 | 160 | 52 |
| Low-temperature characteristics | Glass transition temperature (Tg)[°C] | | -68 | -55 | -69 | -57 | 3 | -30 | -67 | -36 | -51 |
| Heat resistance | Melting point peak temperature (Tm)[°C] | | 237 | 233 | 216 | 197 | 231 | 209 | 219 | 213 | 216 |
| | 120°C·2h heating test | | ○ | ○ | ○ | ○ | ○ | ○ | ○ | ○ | ○ |
| Flexibility | Tensile test | Tensile modulus [MPa] | 817 | 31 | 21 | 10 | 103 | 28 | 67 | 38 | 36 |
| Mechanical strength | Test piece bending test | | B | A | A | A | A | A | A | B | A |

(continued)

| | Example | | | | | | | | |
|---|---|---|---|---|---|---|---|---|---|
| | 7 | 8 | 9 | 10 | 11 | 12 | 13 | 14 | 15 |
| Biomass degree[wt%] | 27.4 | 46.7 | 56.7 | 66.9 | 27.3 | 46.4 | 46.7 | 46.9 | 47.1 |

[Table 5B]

<Table 5B>

| | | | Comparative Example | | |
|---|---|---|---|---|---|
| | | | 7 | 8 | 9 |
| Ratio of carbonate structural unit (wt%) | Carbonate structural unit (X) | PO3G500-1 | | | 84.2 |
| | | PO3G1000-2 | | | |
| | | PO3G2700 | | | |
| | Other carbonate structural unit | PTMG4000 | | 47.1 | |
| | Carbonate structural unit (Y) | DHDE | | 52.9 | |
| | | BPF | | | |
| | | ThioDP | | | |
| | | BPA | 100 | | 15.8 |
| Flowability | Q value [× $10^{-2}cm^3/sec$] | 240°C | 1.4 | 158 | 168 |
| | | 220°C | 0.4 | - | 162 |
| Low-temperature characteristics | Glass transition temperature (Tg)[°C] | | 145 | n.d. | -59 |
| Heat resistance | Melting point peak temperature (Tm)[°C] | | n.d. | 25, 64, 235 | n.d. |
| | 120°C·2h heating test | | ○ | ○ | × |
| Flexibility | Tensile test | Tensile modulus [MPa] | 1710 | 67 | Pressing imposible |
| Mechanical strength | Test piece bending test | | A | C | Pressing imposible |
| Biomass degree[wt%] | | | 0 | 0 | 80.2 |

[Consideration of Examples 7 to 15 and Comparative Examples 7 to 9]

The following can be seen from the results of Examples 7 to 15 and Comparative Examples 7 to 9.

Table 5A shows that Examples 7 to 15 contain the carbonate structural unit (X) of PO3G and the carbonate structural unit (Y) of the dihydroxy compound (2) and have a melting point peak temperature, so they all achieved good results in low-temperature mechanical strength (glass transition temperature), heat resistance, flexibility, and mechanical strength.

Comparative Example 7 in Table 5B is a general BPA polycarbonate resin and has poor flexibility.

Comparative Example 2, which uses PTMG instead of PO3G, has poor mechanical strength.

Comparative Example 3, which contains the carbonate structural unit (X) and the carbonate structural unit (Y) but has too much carbonate structural unit (X), does not have a melting point peak temperature, has poor heat resistance, and does not solidify at room temperature, so cannot be pressed.

[Example 16]

The polycarbonate resin produced in Example 2 (biomass ratio = 57.7 wt%) and the polycarbonate resin produced in Example 3 (biomass ratio = 67.8 wt%) were mixed by dry blending at 50 wt% each to obtain a polycarbonate resin composition (biomass ratio = 62.7 wt%).

The polycarbonate resin composition thus obtained was subjected to measurements of the glass transition temperature (Tg), and melting point peak temperature (Tm), and further subjected to a heating test at 120°C. A tensile test was also performed using a test piece obtained by hot pressing this polycarbonate resin composition, and the tensile modulus and breaking elongation were measured. A bending test was also performed on the hot pressed test piece.

The results are shown in Table 6.

[Table 6]

<Table 6>

<table>
<tr><td colspan="3" rowspan="2"></td><td>Example</td></tr>
<tr><td>16</td></tr>
<tr><td rowspan="2">Polycarbonate resin blend weight ratio[wt%]</td><td colspan="2">Polycarbonate resin of Example 2</td><td>50</td></tr>
<tr><td colspan="2">Polycarbonate resin of Example 3</td><td>50</td></tr>
<tr><td rowspan="2">Content of each carbonate structural unit [wt%]</td><td colspan="2">Carbonate structural unit (X)(PO3G2700)</td><td>63.3</td></tr>
<tr><td colspan="2">Carbonate structural unit (Y)(SPG)</td><td>36.7</td></tr>
<tr><td>Low-temperature properties</td><td colspan="2">Glass transition temperature (Tg)[°C]</td><td>-72</td></tr>
<tr><td rowspan="2">Heat resistance</td><td colspan="2">Melting point peak temperature (Tm)[°C]</td><td>219</td></tr>
<tr><td colspan="2">120°C·2h heating test</td><td>○</td></tr>
<tr><td>Flexibility</td><td rowspan="2">Tensile test</td><td>Tensile modulus [MPa]</td><td>43</td></tr>
<tr><td rowspan="2">Mechanical strength</td><td>Breakiing elongation [%]</td><td>251</td></tr>
<tr><td colspan="2">Test piece bending test</td><td>A</td></tr>
<tr><td colspan="3">Biomass degree</td><td>62.7</td></tr>
</table>

From Table 6, it can be seen that even when two or more kinds of polycarbonate resins of the present invention are blended, similarly excellent heat resistance, flexibility, mechanical strength, and low-temperature mechanical strength can be obtained.

[Consideration]

The reason why the polycarbonate resins of the Examples were able to achieve both particularly excellent heat resistance and flexibility is considered as follows.

In the polycarbonate resin composition of the present invention, which has the carbonate structural unit (X) and the carbonate structural unit (Y) and has a melting point peak temperature, the carbonate structural unit (X) forms a soft segment, the carbonate structural unit (Y) forms a hard segment. Therefor, it is believed that the pseudo-crosslinking of the hard segments results in high heat resistance, while the soft segments provide flexibility.

From the above results, it can be seen that the polycarbonate resin composition of the present invention has excellent heat resistance, flexibility, mechanical strength, low-temperature mechanical strength, and rubber elasticity.

Although the present invention has been described in detail with reference to particular embodiments, it will be apparent to those skilled in the art that various modifications may be made therein without departing from the spirit and scope of the present invention.

The present application is based on Japanese Patent Application 2022-120723 and Japanese Patent Application No. 2022-120724, filed on July 28, 2022, which are incorporated herein by reference in their entirety.

## Claims

1. A polycarbonate resin composition comprising: a carbonate structural unit (X) derived from an aliphatic dihydroxy compound (1) represented by the following formula (1); and, a carbonate structural unit (Y) derived from a dihydroxy compound (2) satisfying the following requirement I,
wherein the polycarbonate resin composition has a melting point peak temperature when the melting point peak temperature is measured using a differential scanning calorimeter and heating the polycarbonate resin composition at a heating rate of 20°C/min.
<Requirement I>
A polycarbonate resin (2) obtained by polymerizing the dihydroxy compound (2) and a carbonate source by a transesterification method has a melting point peak temperature when the melting point peak temperature is measured using a differential scanning calorimeter and heating the polycarbonate resin (2) at a heating rate of 20°C/min.

[Chem. 1]

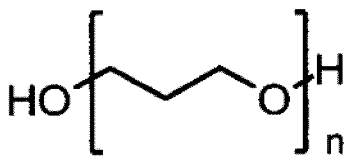

(1)

(In the formula (1), n is an integer of 2 or more.)

2. The polycarbonate resin composition according to claim 1, wherein a content of the carbonate structural unit (X) is 1 wt% or more and 99 wt% or less, and the content of the carbonate structural unit (Y) is 0.1 wt% or more and 99 wt% or less, based on 100 wt% of all carbonate structural units of the polycarbonate resin composition.

3. The polycarbonate resin composition according to claim 2, wherein the content of the carbonate structural unit (X) is 1 wt% or more and 75 wt% or less, and the content of the carbonate structural unit (Y) is 25 wt% or more and 99 wt% or less, based on 100 wt% of all carbonate structural units of the polycarbonate resin composition.

4. The polycarbonate resin composition according to claim 1, wherein the sum of a content of the carbonate structural unit (X) and a content of the carbonate structural unit (Y) is 90 wt% or more, based on 100 wt% of all carbonate structural units of the polycarbonate resin composition.

5. The polycarbonate resin composition according to claim 1, wherein a number average molecular weight of the aliphatic dihydroxy compound represented by the formula (1) is 400 or more and 2,900 or less.

6. The polycarbonate resin composition according to claim 1, wherein in the measurement of the melting point peak temperature of the requirement I, the polycarbonate resin (2) has a melting point peak temperature when the polycarbonate resin (2) obtained by polymerization by the transesterification method is directly subjected to the measurement of the melting point peak temperature.

7. The polycarbonate resin composition according to claim 1, wherein the melting point peak temperature of the polycarbonate resin (2) is 150°C or higher and 300°C or lower.

8. The polycarbonate resin composition according to claim 1, wherein the dihydroxy compound (2) is a dihydroxy compound represented by any one of the following formulas (2) to (6).

[Chem. 2]

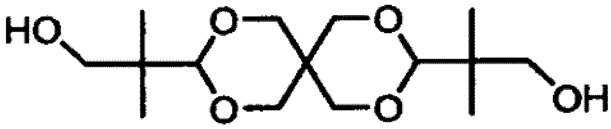

(2)

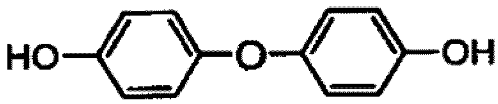

(3)

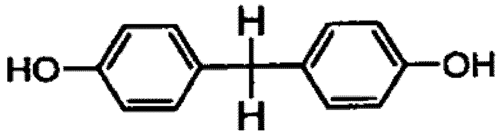

(4)

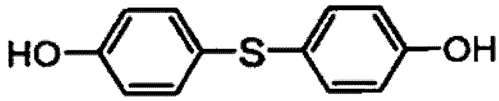

(5)

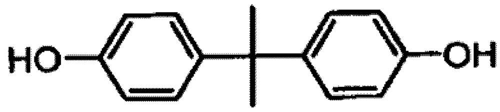

(6)

**9.** The polycarbonate resin composition according to claim 1, wherein the polycarbonate resin composition has the melting point peak temperature in the range of 150°C or higher.

**10.** The polycarbonate resin composition according to claim 1, wherein the polycarbonate resin composition has the melting point peak temperature in the range of 240°C or lower.

**11.** The polycarbonate resin composition according to claim 1, wherein the dihydroxy compound (2) is a dihydroxy compound represented by the following formula (2).

[Chem. 3]

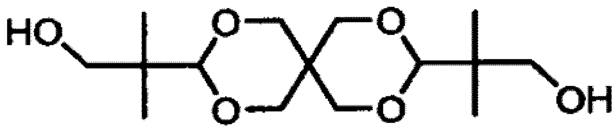

(2)

**12.** The polycarbonate resin composition according to claim 11, wherein the polycarbonate resin composition has a number average molecular weight (Mn) (polystyrene equivalent molecular weight) measured by GPC of 10,000 or more and 100,000 or less.

**13.** The polycarbonate resin composition according to claim 1, wherein the carbonate structural unit (X) and the carbonate structural unit (Y) are contained as a copolymerized polycarbonate resin.

**14.** The polycarbonate resin composition according to claim 1, wherein the polycarbonate resin composition is a blend of a polycarbonate resin containing the carbonate structural unit (X) and a polycarbonate resin containing the carbonate structural unit (Y).

15. The polycarbonate resin composition according to claim 1, wherein the polycarbonate resin composition has a flow value (Q value) of $3\times10^{-2}$ $cm^3$/sec or more measured using a raised-type flowtester at 240°C and 160 kgf.

16. The polycarbonate resin composition according to claim 1, wherein the polycarbonate resin composition has a glass transition temperature of 30°C or lower when the glass transition temperature is measured using a differential scanning calorimeter and heating the polycarbonate resin composition at a heating rate of 20°C/min.

17. The polycarbonate resin composition according to claim 1, wherein a sample prepared by hot pressing the polycarbonate resin composition has a tensile modulus of 5 MPa or more and 300 MPa or less.

18. A thermoplastic resin composition comprising the polycarbonate resin composition according to claim 1, wherein the content of the polycarbonate resin composition is 1 wt% or more and 30 wt% or less, based on 100 wt% of the thermoplastic resin composition.

19. An injection molded product obtained by injection molding the polycarbonate resin composition according to any one of claims 1 to 17 or the thermoplastic resin composition according to claim 18.

20. An extrusion molded product obtained by extrusion molding the polycarbonate resin composition according to any one of claims 1 to 17 or the thermoplastic resin composition according to claim 18.

21. The extrusion molded product according to claim 20, wherein the extrusion molded product is a sheet or a film.

## INTERNATIONAL SEARCH REPORT

International application No.
**PCT/JP2023/027761**

### A. CLASSIFICATION OF SUBJECT MATTER

***C08L 69/00***(2006.01)i; ***C08G 64/02***(2006.01)i; ***C08G 64/04***(2006.01)i
FI: C08L69/00; C08G64/02; C08G64/04

According to International Patent Classification (IPC) or to both national classification and IPC

### B. FIELDS SEARCHED

Minimum documentation searched (classification system followed by classification symbols)

C08L69/00; C08G64/02; C08G64/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2021/059884 A1 (MITSUBISHI GAS CHEMICAL COMPANY, INC.) 01 April 2021 (2021-04-01)<br>claims, paragraph [0014], examples | 1-10, 12-21<br>11 |
| X<br>A | WO 2021/059902 A1 (MITSUBISHI ENGINEERING-PLASTICS CORPORATION) 01 April 2021 (2021-04-01)<br>claims, paragraph [0018], examples | 1-10, 12-21<br>11 |
| A | WO 2021/210647 A1 (MITSUBISHI CHEM CORP) 21 October 2021 (2021-10-21)<br>claims, example 14 | 1-21 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2023/027761**

| Patent document cited in search report | Publication date (day/month/year) | Patent family member(s) | Publication date (day/month/year) |
|---|---|---|---|
| WO 2021/059884 A1 | 01 April 2021 | US 2022/0389159 A1<br>claims, paragraph [0040], examples<br>EP 4036146 A1<br>CN 114423805 A<br>KR 10-2022-0069019 A | |
| WO 2021/059902 A1 | 01 April 2021 | CN 114466896 A<br>TW 202116918 A | |
| WO 2021/210647 A1 | 21 October 2021 | US 2023/0024196 A1<br>claims, example 14<br>EP 4137529 A1<br>CN 114867765 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004111106 A
- WO 2007148604 A
- JP 2021091900 A
- JP 2021169606 A
- WO 2021059884 A
- JP 2022120723 A
- JP 2022120724 A